(19) **Europäisches Patentamt / European Patent Office / Office européen des brevets**

(11) **EP 3 989 051 A1**

(12) # EUROPEAN PATENT APPLICATION

(43) Date of publication:
**27.04.2022  Bulletin 2022/17**

(21) Application number: **21197712.9**

(22) Date of filing: **20.09.2021**

(51) International Patent Classification (IPC):
**G06F 3/04883** (2022.01)    **G06F 3/04886** (2022.01)

(52) Cooperative Patent Classification (CPC):
**G06F 3/04883; G06F 3/04886**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020  JP 2020178166**

(71) Applicant: **Ricoh Company, Ltd.**
**Tokyo 143-8555 (JP)**

(72) Inventors:
• **IGARASHI, Kanae**
  **Tokyo, 143-8555 (JP)**
• **FUJIOKA, Susumu**
  **Tokyo, 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **INPUT DEVICE, INPUT METHOD, MEDIUM, AND PROGRAM**

(57) An input device includes a handwriting input unit configured to receive a handwriting input; a rendering generator configured to generate a handwriting object based on the handwriting input received by the handwriting input unit; an object manager configured to change a shape of a display area of a first rendering object such that the first rendering object and a second rendering object do not overlap with each other, the first rendering object displaying a character or a character string recognized from the handwriting object, and the second rendering object being other than the first rendering object; and a display controller configured to display the first rendering object having the changed shape of the display area.

FIG.19D

EP 3 989 051 A1

**Description**

BACKGROUND OF THE INVENTION

1. Field of the Invention

The present disclosure relates to an input device, an input method, a recording medium, and a program.

2. Description of the Related Art

In an electronic blackboard or an application (hereinafter, referred to as an input device) that receives handwriting input from a user, pre-registered rendering components such as graphic shapes (lines, circles, triangles, balloons, etc.), figures, lines, and arrows can be selected and displayed. Such rendering components are managed as rendering objects. Some rendering objects, such as a balloon, have a display area in which a character or a character string is entered, such that the rendering objects display a character or a character string.

Patent Document 1, for example, discloses a well-known technique of determining the size of a balloon based on the size of the area in which a balloon is disposed, and changing the size of characters included in the text information according to the size of the balloon.

However, the related art input devices may require improved operability for properly inputting a character or a character string into rendering objects such as a balloon. For example, when a user inputs a character or a character string into a rendering object such as a balloon having a display area, the user has to switch between various functions such as an editing function and a character input function so as to display a character or a character string in the display area of the rendering object. It should be noted that Patent Document 1 does not describe such a problem.

An object of an embodiment of the present invention is to improve the operability for inputting a character or a character string with respect to a rendering object.

[Related art document]

[Patent Document]

[Patent Document 1] Japanese Patent Application Laid-Open No. 2015-73198

SUMMARY OF THE INVENTION

According to one aspect of the present invention, an input device is provided. The input device includes

a handwriting input unit configured to receive a handwriting input;
a rendering generator configured to generate a handwriting object based on the handwriting input received by the handwriting input unit;
an object manager configured to change a shape of a display area of a first rendering object such that the first rendering object and a second rendering object do not overlap with each other, the first rendering object displaying a character or a character string recognized from the handwriting object, and the second rendering object being other than the first rendering object; and
a display controller configured to display the first rendering object having the changed shape of the display area.

[Effects of the Invention]

Embodiments of the present invention can improve the operability of the input of a character or a character string into rendering objects.

BRIEF DESCRIPTION OF THE DRAWINGS

Fig. 1 is an overall configuration diagram illustrating an example of an electronic blackboard according to the present embodiment;
Fig. 2 is a hardware configuration diagram illustrating an example of a touch panel according to the present embodiment;

Fig. 3 is a hardware configuration diagram illustrating an example of a controller according to the present embodiment;

Fig. 4 is a functional block diagram illustrating an example of an electronic blackboard according to the present embodiment;

Fig. 5 is a diagram illustrating a display example of a rendering object in the display unit;

Fig. 6 is a configuration diagram illustrating an example of a rendering object management table;

Figs. 7A to 7D are diagrams illustrating examples of a character or a character string entered by handwriting recognition in a balloon object;

Fig. 8 is a flowchart illustrating an example of a process of an electronic blackboard in the case of Figs. 7A to 7D;

Figs. 9A to 9D are diagrams illustrating examples of a character or a character string entered by handwriting recognition in a balloon object;

Fig. 10 is a flowchart illustrating an example of a process of an electronic blackboard in step S16;

Figs. 11A to 11C are diagrams illustrating examples of a character or a character string entered by handwriting recognition in a balloon object;

Fig. 12 is a flowchart illustrating an example of a process of an electronic blackboard in step S16;

Figs. 13A to 13C are diagrams illustrating examples of a character or a character string entered by handwriting recognition in a balloon object;

Fig. 14 is a flowchart illustrating an example of a process of an electronic blackboard in step S16;

Figs. 15A to 15C are diagrams illustrating examples of a character or a character string entered by handwriting recognition in a balloon object;

Figs. 16A and 16B are diagrams illustrating an example of a setting for moving to a rendering object;

Fig. 17 is a configuration diagram illustrating an example of a rendering object management table;

Fig. 18 is a flowchart illustrating an example of a process of an electronic blackboard in step S16;

Figs. 19A to 19D are diagrams illustrating examples of a character or a character string entered by handwriting recognition in a balloon object;

Fig. 20 is a flowchart illustrating an example of a process of an electronic blackboard in step S16;

Fig. 21 is a diagram illustrating another configuration example of an input device;

Fig. 22 is a diagram illustrating another configuration example of an input device;

Fig. 23 is a diagram illustrating another configuration example of an input device;

Fig. 24 is a diagram illustrating another configuration example of an input device;

Fig. 25 is an overall configuration diagram illustrating an example of a PC according to the present embodiment;

Fig. 26 is a hardware configuration diagram illustrating an example of a PC body according to the present embodiment;

Fig. 27 is a functional block diagram illustrating an example of a PC body according to the present embodiment;

Figs. 28A to 28D are diagrams illustrating examples of a character or a character string entered by a keyboard in a balloon object;

Fig. 29 is a flowchart illustrating an example of a process for displaying a character string entered by a keyboard in a balloon object;

Figs. 30A to 30C are diagrams illustrating examples of a character or a character string entered by a keyboard in a balloon object;

Figs. 31A to 31D are diagrams illustrating examples of a character or a character string entered by a keyboard in a balloon object;

Fig. 32 is a flowchart illustrating an example of a process for displaying a character string entered by a keyboard in a balloon object;

Figs. 33A to 33C are diagrams illustrating examples of a character or a character string entered by a keyboard in a balloon object;

Fig. 34 is a flowchart illustrating an example of a process for displaying a character string entered by a keyboard in a balloon object;

Figs. 35A to35C are diagrams illustrating examples of a character or a character string entered by a keyboard in a balloon object; and

Fig. 36 is flowchart illustrating an example of a process for displaying a character string entered by a keyboard in a balloon object.

## DETAILED DESCRIPTION OF THE PREFERRED EMBODIMENTS

Hereinafter, embodiments of the present invention will be described with reference to the accompanying drawings. In the following, an electronic blackboard 1, which is an example of an input device configured to receive handwriting input from a user, will be described; however, the input device is not limited to the electronic blackboard 1.

[First Embodiment]

<Hardware Configuration of Electronic Blackboard >

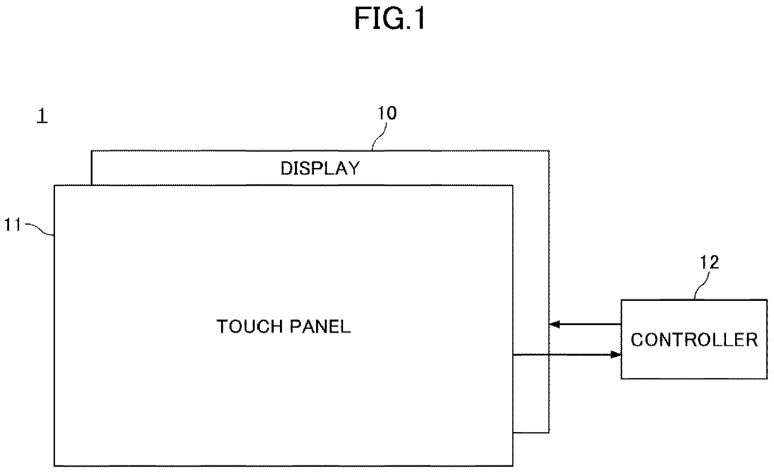

An overall configuration of the electronic blackboard 1 according to an embodiment of the present invention will be described with reference to Fig. 1. Fig. 1 is an overall configuration diagram illustrating an example of an electronic blackboard in accordance with the present embodiment. The electronic blackboard 1 includes a display unit 10, a touch panel 11, and a controller 12. The display unit 10 is a display, such as a liquid crystal display (LCD) .

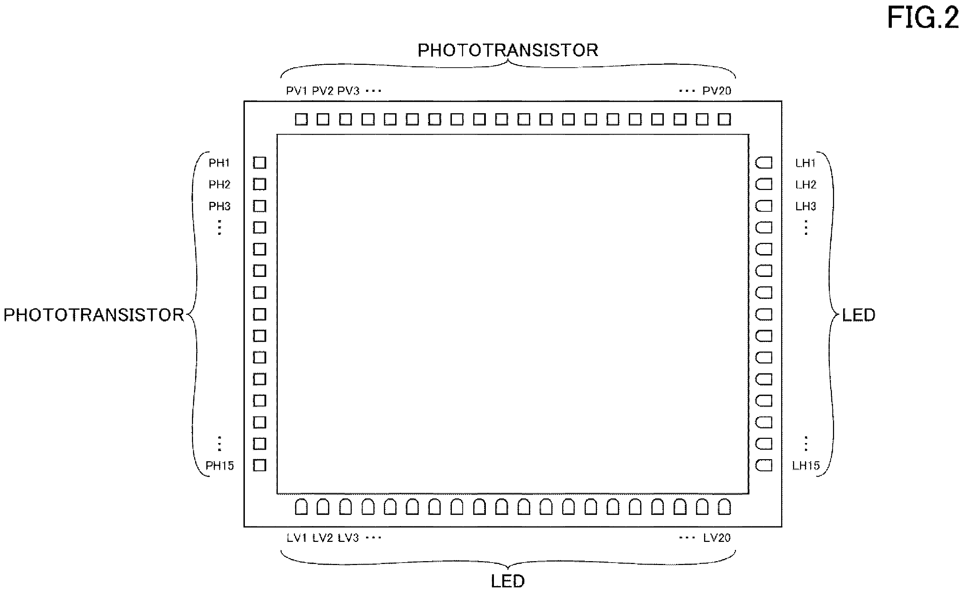

The touch panel 11 includes infrared emitting LEDs (light emitting diodes) and phototransistors that face each other to detect position information as a touched position at a portion where the phototransistors cannot detect light, that is, a portion where light is blocked. The touch panel 11 has a hardware configuration, for example, as illustrated in Fig. 2.

Fig. 2 is an example of a hardware configuration diagram of a touch panel in accordance with the present embodiment. The touch panel 11 is disposed such that the LEDs and the phototransistors in a row are equally spaced, and each LED and the phototransistor face each other. Fig. 2 illustrates an example of the touch panel 11 in which 20 LEDs and 20 phototransistors are arranged in a horizontal direction and 15 LEDs and 15 phototransistors in a vertical direction, respectively. For example, for a touch panel 11 of 40 inches or larger, more LEDs and phototransistors are actually required.

The touch panel 11 may use various detectors including, but not limited to, an electrostatic capacitance type touch panel which specifies a contact position by detecting a change in capacitance, a resistive film type touch panel which specifies a contact position by the voltage change of the two facing resistive films, and an electromagnetic induction type touch panel which detects an electromagnetic induction caused by a contact object contacting the display portion to specify a contact position. The touch panel 11 may be of a system in which an electronic pen is required or not required to detect the presence or absence of a touch at the tip of the pen. In this case, fingertips and pen-shaped bars can be used for touch operations.

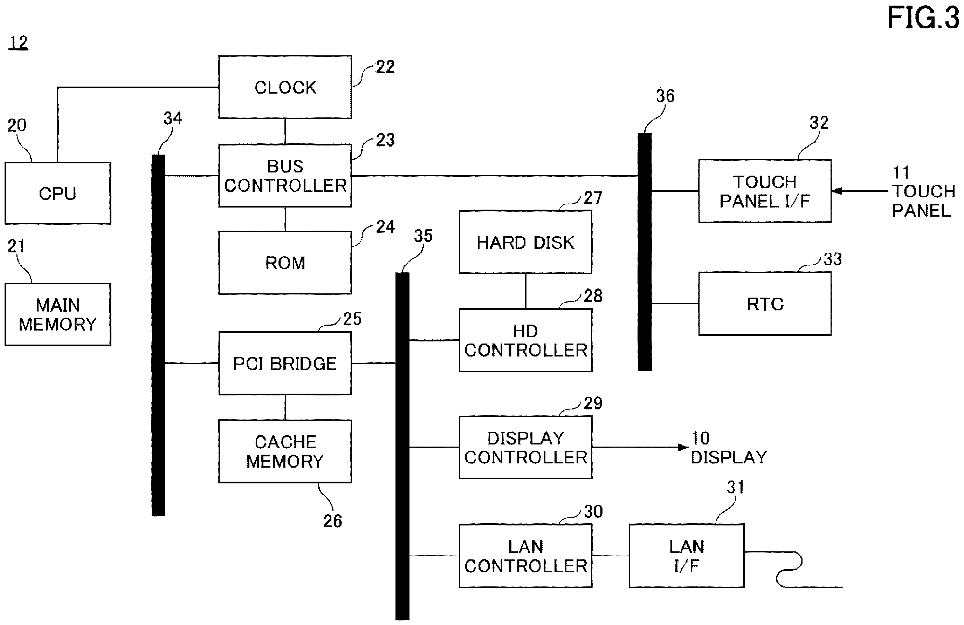

For example, the controller 12 has a hardware configuration as illustrated in Fig. 3. Fig. 3 is a hardware configuration diagram illustrating an example of a controller in accordance with the present embodiment. The controller 12 includes a CPU 20, a main memory 21, a clock 22, a bus controller 23, a ROM (Read Only Memory) 24, a PCI (Peripheral Component Interconnect) bridge 25, a cache memory 26, a hard disk 27, a HD (hard disk) controller 28, a display controller 29, a LAN controller 30, a LANI/F (interface) 31, a touch panel I/F32, an RTC (Real Time Clock) 33, a CPU bus 34, a PCI bus 35, and an X bus 36 (internal bus).

The CPU 20 executes and processes a control processing program stored in the ROM 24, an OS (operating system) read from the hard disk 27 to the main memory 21, and various application programs. The main memory 21 includes a DRAM (Dynamic Random Access Memory) and is used in a work area of the CPU 20 or the like. The clock 22 is comprised of a crystal oscillator and a dividing circuit to generate a clock for controlling the timing of operation of the CPU 20 and the bus controller 23. The bus controller 23 controls data transfer over the CPU bus 34 and the X bus 36.

In the ROM 24, a program for starting the system when the power is on and controlling various devices is written in advance. The PCI bridge 25 transfers data between the PCI bus 35 and the CPU 20 using cache memory 26. The cache memory 26 includes a DRAM and is used by the PCI bridge 25.

The hard disk 27 stores system software, various application programs, data stored by the user, and the like. The HD controller 28 has, for example, an IDE (Integrated Device Electronics) interface with the hard disk 27 for fast data transfer with the hard disk 27.

The display controller 29 converts character data, graphic data, and the like to D/A (Digital/Analog) and performs control for displaying these data on the display unit 10. The LAN controller 30 controls communication with other devices connected to the LAN via the LANI/F31, for example, by executing a communication protocol conforming to the IEEE (Institute of Electronic and Electronic Engineers) 802.3 standard.

The touch panel I/F 32 has a port for the touch panel 11 and is controlled by a touch panel driver (control program). RTC 33 is a date clock backed up by a battery.

In the present embodiment, unless otherwise specified, the CPU 20 performs processing according to the program using the main memory 21 as the work area.

<Functional Configuration of Electronic Blackboard>

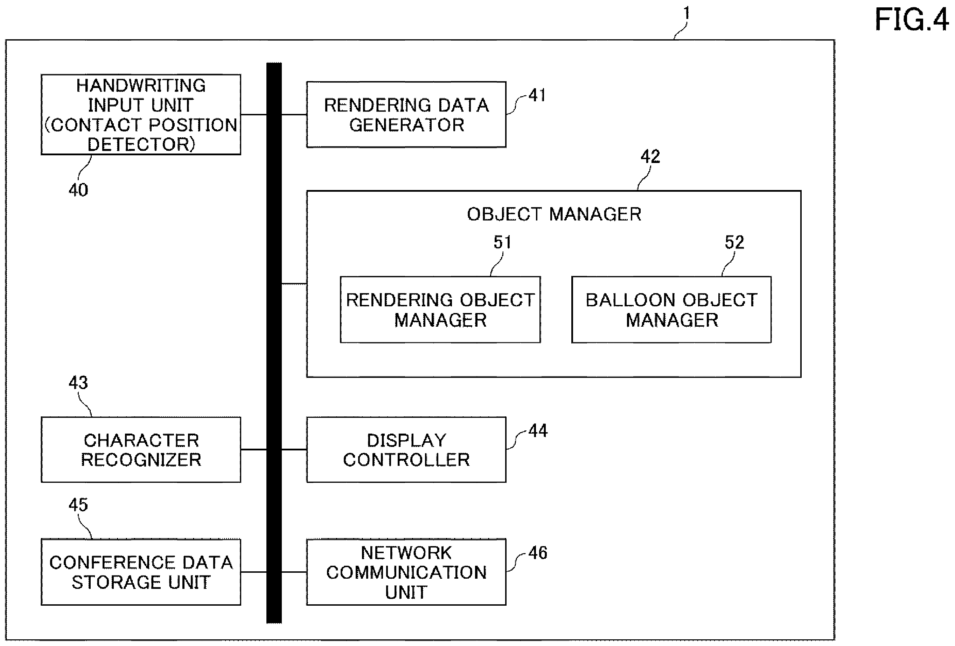

Next, the function of the electronic blackboard 1 will be described with reference to Fig. 4. Fig. 4 is a functional block diagram illustrating an example of an electronic blackboard in accordance with the present embodiment. The electronic blackboard 1 illustrated in Fig. 4 has a structure including a handwriting input unit 40, a rendering data generator 41, an object manager 42, a character recognizer 43, a display controller 44, a conference data storage unit 45, and a network communication unit 46.

Each function of the electronic blackboard 1 is a function or a unit by which any of the components illustrated in Figs. 1 to 3 is implemented by operating via instructions from the CPU 20 according to a program loaded in the main memory 21.

The handwriting input unit 40 is implemented by a command from the CPU 20 illustrated in Fig. 3 and a touch panel 11 and a touch panel I/F 32 illustrated in Fig. 3. The handwriting input unit 40 acquires coordinate data of the portion in contact with the touch panel 11 by a user's hand (the pen or the user's hand is an input unit) to receive the handwriting input by the user. Handwriting input is an input using the locus of coordinates where the hand or the like of the user (the hand of the pen or the user is an input unit) is in contact with the touch panel 11. The handwriting input unit 40 functions as a contact position detector. The handwriting input unit 40 acquires the coordinate data array by the user's handwriting input (i.e., written by the user). The handwriting input unit 40 may determine the coordinate data array as a discrete value. Coordinate data between discrete values are interpolated.

The rendering data generator 41 is implemented by the CPU 20 illustrated in Fig. 3, which uses the main memory 21 as a work area to perform a process according to a program. The rendering data generator 41 generates a handwriting object, such as a rendering line, from the coordinate data array obtained by the handwriting input unit 40 when the user writes. The handwriting object is an object (display object) displayed on the display unit 10, such as a rendering line, which is generated by the coordinate data array obtained by contacting the touch panel 11 with the user's hand or the like. The rendering data generator 41 generates a rendering object, such as a circle, a rectangle, a balloon, and an arrow, from the coordinate data or the coordinate data array acquired by the handwriting input unit 40. For example, a user can create rendering objects, such as circles, rectangles, balloons, and arrows, by retrieving registered rendering parts, such as circles, rectangles, balloons, and arrows, by manipulation of the user's hand (the pen or the user's hand is the input unit).

The object manager 42 is implemented by the CPU 20 illustrated in Fig. 3 by performing the processing according to the program by using the main memory 21 as the work area, and manages the rendering line area, the circle or rectangular area, the balloon area, and the arrow area generated by the rendering data generator 41 as the rendering object. A rendering object is a pre-registered display object such as a graphic shape (a line, a circle, a triangle, a balloon, etc.), diagrams, lines, arrows, etc. A rendering object may have a display area that can be displayed by entering a character or a character string, such as a graphic, e.g., a balloon, a circle, a rectangle, etc.

Hereinafter, among rendering objects having a display area in which a character or a character string can be input and displayed, a rendering object having a balloon shape is called a balloon object. A rendering object having a display area for inputting a character or a character string is an example and is not limited to a balloon object, but other rendering objects having various shapes, such as circles and rectangles may be used. The term balloon is also an example and may be another term, such as a tag or note.

The object manager 42 includes a rendering object manager 51 and a balloon object manager 52. The rendering object manager 51 is implemented by the CPU 20 illustrated in Fig. 3, which uses the main memory 21 as a work area to perform a process according to a program. The object manager 42 manages a rendering object ID by assigning the rendering object ID to an area such as a rendering line, a circle, a rectangle, a balloon, and an arrow generated by the rendering data generator 41. The rendering object ID is an example of identification information that identifies a rendering object. The rendering object manager 51 also manages position information representing a display position (pixel position of the display unit 10) of each rendering object.

The balloon object manager 52 is implemented by the CPU 20 illustrated in Fig. 3, which uses the main memory 21 as a work area to perform a process according to a program. The balloon object manager 52 manages a character or a character string (character data) described in the area (display area) of the balloon object which is managed by the rendering object manager 51 in association with the rendering object ID and the display position. Further, the balloon object manager 52 expands or deforms the area (display area) of the balloon object as described below, or performs a process for changing (adjusting) the font size of a character or a character string described in the area of the balloon object.

The character recognizer 43 is implemented by the CPU 20 illustrated in Fig. 3, which uses the main memory 21 as the work area to perform a process in accordance with a program. The character recognizer 43 compares a character or a character string handwritten by the user with dictionary data such as the handwriting recognition dictionary, based on the handwriting input received by the handwriting input unit 40, and outputs text data of the character or the character string, thereby performing handwriting recognition of the character or the character string (a handwriting character or a handwriting character string) handwritten by the user.

The handwriting recognition performed by the character recognizer 43 is to recognize a character (not only Japanese but also many other languages, such as English), a number, a symbol, or the like in parallel with the handwriting input operation of the user. Note that various algorithms have been devised for the method of handwriting recognition, but details will be omitted because well-known techniques are available.

The character recognizer 43 outputs a character recognition termination command when a predetermined time (for example, 2 seconds) has elapsed from the end of input of the handwriting character or the handwriting character string to the state where there is no next input. The display controller 44 is implemented by a command from the CPU 20 illustrated in Fig. 3 and a display controller 29 illustrated in Fig. 3 to perform control for displaying rendering data on a display (display unit 10) .

The conference data storage unit 45 is implemented by a command from the CPU 20 illustrated in Fig. 3, a hard disk 27 illustrated in Fig. 3, and an HD controller 28. The conference data storage unit 45 stores materials, rendering data of a handwriting object or a rendering object, and the like used in the conference. The network communication unit 46 is implemented by a command from the CPU 20 illustrated in Fig. 3, a LAN controller 30 illustrated in Fig. 3, and a LANI/F31 or the like to transmit and receive data connected to a network such as a LAN.

<Position of Rendering Object>

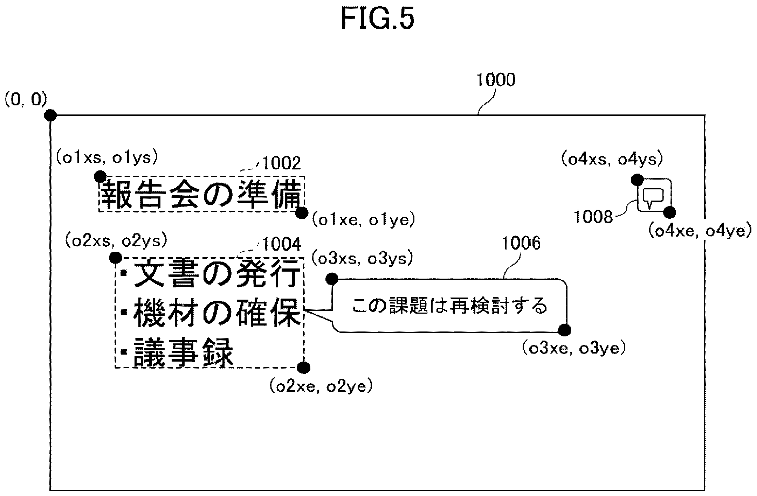

Herein, the display position of the rendering object managed by the rendering object manager 51 will be described. Fig. 5 is a diagram illustrating a display example of a rendering object displayed on a display unit 10. Fig. 5 displays rendering objects 1002, 1004, and 1008 and a balloon object 1006 in a display area 1000. The rendering object 1002 displays "報告会の準備" meaning "Preparing for the debriefing session" in Japanese. The rendering object of 1004 displays, in the order from the top to the bottom, "文書の発行" meaning "Publication of documents", "機材の確保" meaning "Securing equipment", and "議事録" meaning "Minutes" in Japanese. The 1006 balloon object displays "この課題は再検討する" meaning "This issue will be reviewed" in Japanese. The position of the displayed pixel of the display unit 10 is represented by the following display coordinates where the position of the pixel in the upper left corner of the display area 1000 of the display unit 10 is the origin and the rightward direction is the positive direction of the X-axis and the lower direction is the positive direction of the Y-axis. That is,

```
Displayed coordinates = (number of pixels in the X-
axis direction from pixel of origin position, number
of pixels in the Y-axis direction from pixel of
origin position)
```

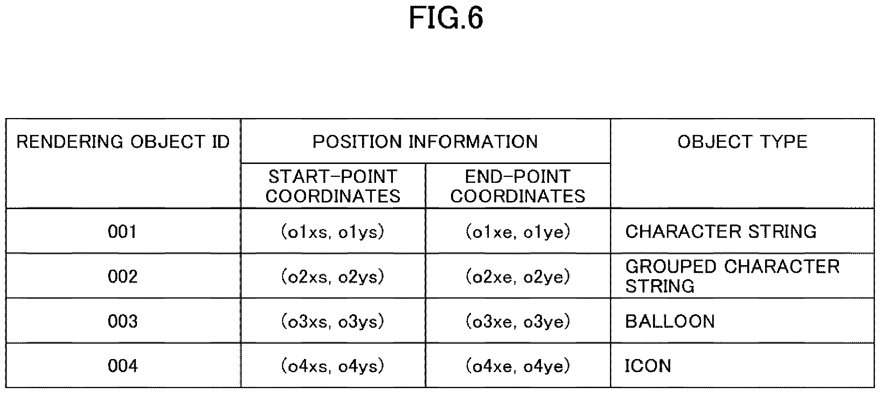

The rendering object manager 51 manages the area of the rendering object displayed in the display area 1000 with, for example, a rectangle circumscribing the rendering object, using position information with the pixel position in the upper left corner of the rectangular area as the start-point coordinates and the pixel position in the lower right corner of the rectangular area as the end-point coordinates. For example, the rendering object manager 51 manages the display positions of the rendering objects 1002, 1004, and 1008 and the balloon object 1006 displayed in the display area 1000 of Fig. 5 by, for example, the rendering object management table of Fig. 6.

Fig. 6 is a configuration diagram illustrating an example of a rendering object management table. The rendering object management table illustrated in Fig. 6 manages the rendering object ID in association with position information represented by the start-point coordinates and end-point coordinates of each rendering object 1002, 1004, and 1008 and the balloon object 1006, and the object type.

The rendering object 1002 of Fig. 5 illustrates an example where "object type" is "string". Rendering object 1004 illustrates an example of "object type" as "grouped string". Rendering object 1008 illustrates an example where "object type" is "icon". In addition, the balloon object 1006 illustrates an example in which "object type" is "balloon".

For example, the rendering object 1004 illustrates an example in which the character strings are grouped together and managed as one rendering object when the distance between the character strings is less than or equal to a predetermined value. The balloon object 1006 has a rectangular shape with a protrusion, but is illustrated as an example in which the display position is managed by a rectangular portion. The balloon object 1006 is an example in which a character string "この課題" is entered into the display area and displayed.

<Input of Character or Character String to a Balloon Object Using Handwriting recognition>

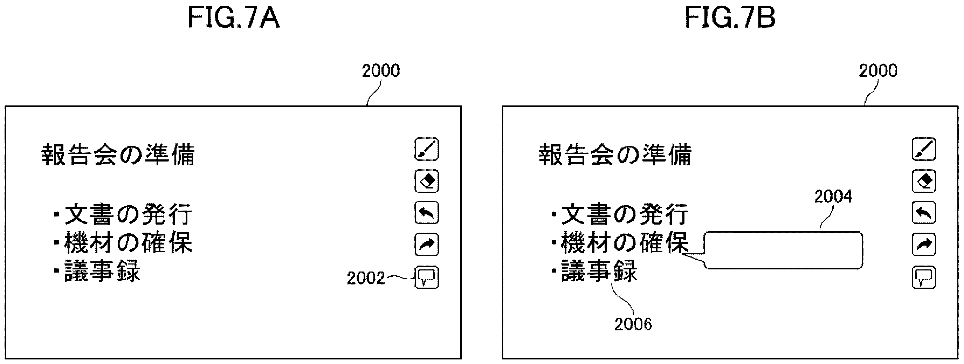

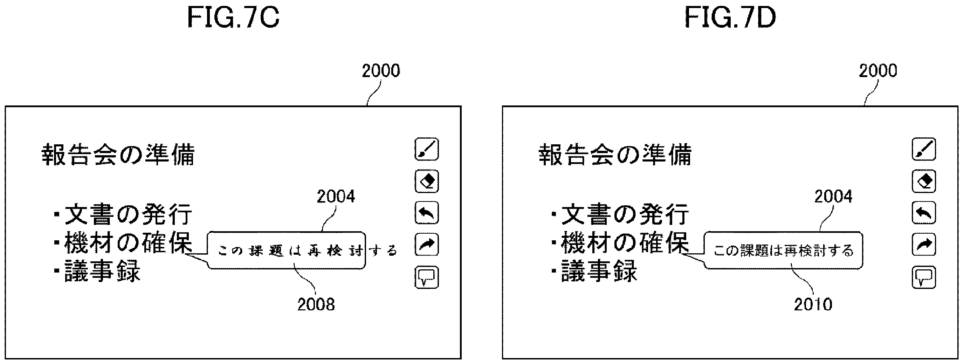

For example, a user enters a character or character string utilizing handwriting recognition into the balloon object 1006 of Fig. 5, for example, as in screen examples illustrated in Figs. 7A to 7D. Figs. 7A to 7D are diagrams illustrating examples of input of a character or a character string to a balloon object using handwriting recognition. Similar to Fig. 5, Figs. 7A to 7D each display, in the order from the top to the bottom, "報告会の準備" meaning "Preparing for the debriefing session", "文書の発行" meaning "Publication of documents", "機材の確保" meaning "Securing equipment", and "議事録" meaning "Minutes" in Japanese. In Figs. 7C and 7D, each balloon object 2004 displays "この課題" meaning "This issue will be reviewed" in Japanese, where the balloon object 2004 displays in Fig. 7C displays a handwriting version and the balloon object 2004 displays in Fig. 7D displays a text date version.

Fig. 7A illustrates a screen 2000 displayed on the electronic blackboard 1, at a conference using an electronic blackboard 1. For example, a user who wishes to add and display a balloon object to the screen 2000 of Fig. 7A performs an operation of selecting an icon 2002. The operation of selecting a rendering object, such as an icon 2002, means, unless otherwise specified, to press a position of the touch panel 11 displaying the rendering object with a finger or a pen.

When the handwriting input unit 40 receives an operation of selecting the icon 2002 from the user, the rendering data generator 41 generates, for example, a balloon object 2004 having the width "x0" and the height "y0" of the area and displays the balloon object 2004 in the center of the screen 2000. Note that the fact that the rendering data generator 41 generates the balloon object 2004 means that the rendering data of the balloon object 2004 is generated unless otherwise specified. The size of the balloon object 2004 area is managed by the rendering object manager 51.

The user performs the operation of moving the balloon object 2004 displayed in the center of a screen 2000 to the right of the character string "機材の確保" of the rendering object 2006, which is associated with the object type "Grouped character string" for example, as illustrated in Fig. 7B. The operation of moving the balloon object 2004 illustrated in the screen 2000 means that, unless otherwise specified, a destination position of the touch panel 11 that is touched with the fingertip or the pen tip after the selecting operation, or the balloon object 2004 is dragged to the destination position of the touch panel 11.

The user then manually enters the character string 2008 "この課題", as illustrated in Fig. 7C, with respect to the balloon object 2004 of Fig. 7B. The user performs a handwriting input so that the beginning of a handwriting input character string 2008 is within the balloon object 2004 area. For example, the first stroke of the character string 2008 illustrated in Fig. 7C is the first stroke of the character "こ". Stroke means a line or curve that is handwritten by a user by moving the fingertip or the pen tip when the user presses down on any position of the touch panel 11.

At this time, with reference to the rendering object management table of Fig. 6, the rendering object manager 51 determines that the coordinates of the beginning of the handwriting input "この課題" detected by the handwriting input unit 40 are within the balloon object 2004 area. The rendering object manager 51 determines that the character string 2008 of the handwriting input is input to the balloon object 2004 and associates the character string 2008 of the handwriting input to the balloon object 2004.

The rendering object manager 51 notifies the balloon object manager 52 that the character string 2008 of the handwriting input is input to the balloon object 2004. The character recognizer 43 performs a character recognition process for each of "この", "課題" "は", "再検討" and "する" of the handwriting input of "この課題", and outputs text data for each of these characters.

The character recognizer 43 outputs the character recognition termination command when a predetermined time has elapsed from the handwriting input of "この課題". Upon receiving the character recognition termination command, the balloon object manager 52 converts the text data 2010 recognized by the character string 2008 of the handwriting input into font data such as Gothic.

Further, the balloon object manager 52 adjusts (shrinks) the font size so that the entire text data 2010 converted into font data is within the display area of the balloon object 2004. The rendering object manager 51 and the balloon object manager 52 manage rendering data so that text data 2010 is displayed from the coordinate position where an offset value is added to the start-point coordinates of the balloon object 2004. The offset value is used to adjust the display position of the text data 2010 with respect to the start-point coordinates of the balloon object 2004. The offset value represents the distance from the left end of the balloon object 2004 to the display start position of the text data 2010.

For example, the display controller 44 displays the screen 2000 of Fig. 7D on the display unit 10 according to the rendering data modified so that the text data 2010 is displayed from the start-point coordinates of the balloon object 2004 to which the offset value is added.

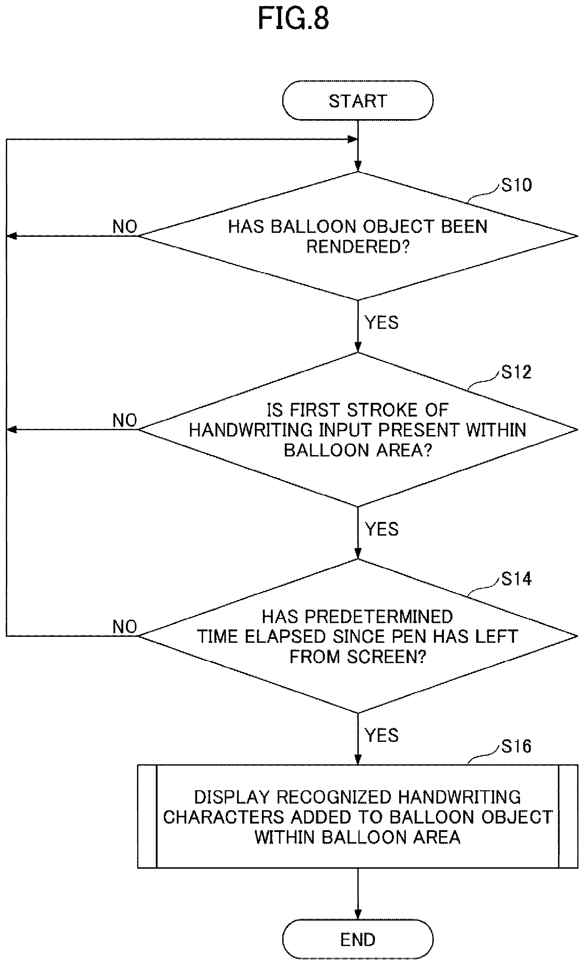

The flowchart of the operation of the electronic blackboard 1 in the case of Fig. 7 is as illustrated in Fig. 8. Fig. 8 is a flowchart illustrating an example of a process of an electronic blackboard in the case of Fig. 7. The rendering object manager 51 of the electronic blackboard 1 proceeds to step S10 and step S12 to perform processes when the balloon object 2004 is rendered on the screen 2000.

When the rendering object manager 51 determines that the first stroke of the handwriting input "この課題" detected by the handwriting input unit 40 is within the balloon object 2004 area, the rendering object manager 51 proceeds to step S12 to step S14 to perform processes. In step S14, when a certain period (for example, 2 seconds) has elapsed since the character string 2008 of the handwriting input is written (after the fingertip or the pen tip was separated from the touch panel 11), the character recognizer 43 proceeds to step S14 to step S16 to perform the processes. The rendering object manager 51 may use the first contact coordinates instead of the first stroke.

The character recognizer 43 performs character recognition processing of a handwriting input "この課題", and outputs text data 2010. The balloon object manager 52 adjusts the font size as needed so that all of the recognized text data 2010 from the handwriting input character string 2008 is within the balloon object 2004 area associated with the position information of the handwriting input character string 2008.

The rendering object manager 51 and the balloon object manager 52 manage rendering data so that text data 2010 is displayed from the start-point coordinates of the balloon object 2004 to which an offset value is added. Accordingly, the display controller 44 can display the text data recognized by the character string 2008 of the handwriting input and display the text data in the display area of the display object 2004, for example, as illustrated in Fig. 7D.

According to the first embodiment, the operability of input of a character or a character string to a rendering object, such as a balloon object 2004, can be improved.

[Second Embodiment]

The second embodiment is an example in which the balloon object 2004 (an example of the first rendering object) is added to the right side of the rendering object 2006 associated with the object type being "grouped character string" as in the first embodiment, and in which the rendering object (an example of the second rendering object) having the stamp (mark) shape is also present on the right side and the lower side of the balloon object 2004.

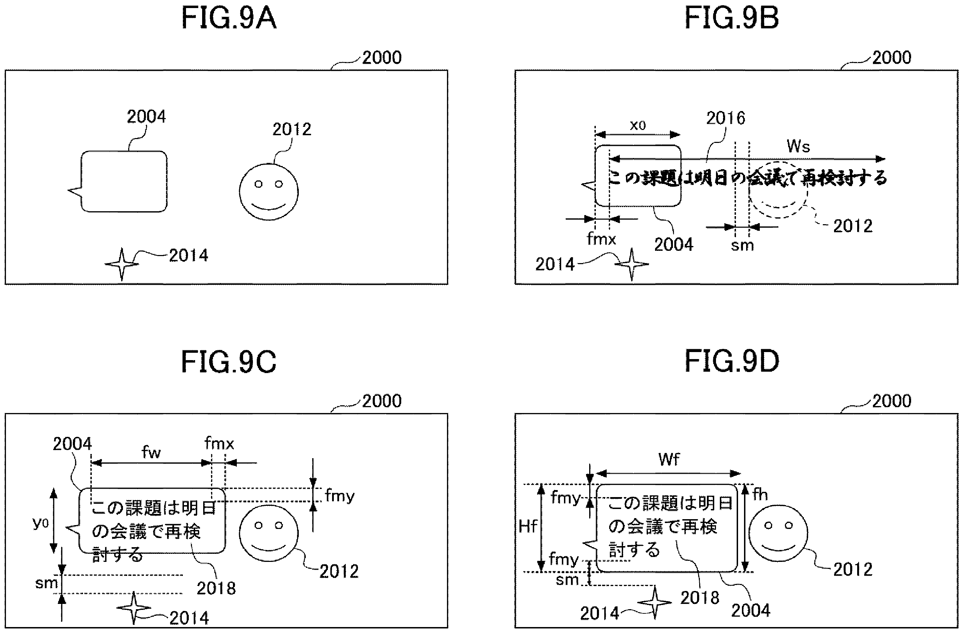

Figs. 9A to9D are diagrams illustrating examples of input of a character or a character string to a balloon object using handwriting recognition. Fig. 9B displays the handwriting input of "この課題は明日の会議で再検討する" meaning "This issue will be reviewed at tomorrow's meeting" in Japanese, Figs. 9C and 9D display text data 2018 of "この課題は明日の会議で再検討する" meaning "This issue will be reviewed at tomorrow's meeting" in Japanese in the balloon object 2004. Fig. 9A is a screen 2000 in which the balloon object 2004 is displayed on the right side of the rendering object 2006 illustrated in Fig. 7A. Next, the user manually inputs (performs handwriting) the text string 2016 of the balloon object 2004 of Fig. 9A "この課題は明日の会議で再検討する" into the balloon object 2004 area, as illustrated in Fig. 9B.

The rendering object manager 51 refers to the rendering object management table and determines that the coordinates of the beginning of the handwriting input "この課題は明日の会議で再検討する" detected by the handwriting input unit 40 are within the balloon object 2004 area. The rendering object manager 51 determines that the handwriting input character string 2016 is input to the balloon object 2004 and associates the handwriting input character string 2016 with the balloon object 2004.

The rendering object manager 51 notifies the balloon object manager 52 that the handwriting input character string 2016 has been input to the balloon object 2004. The character recognizer 43 performs character recognition processing for each character of the handwriting input "この課題は明日の会議で再検討する", and outputs text data for each character.

The character recognizer 43 outputs the character recognition termination command when a predetermined time has elapsed from the handwriting input of "この課題は明日の会議で再検討する". Upon receiving the character recognition termination command, the balloon object manager 52 converts the recognized text data 2018 from the handwriting input character string 2016 into font data such as Gothic.

Further, the balloon object manager 52 modifies (expands) the size of the balloon object 2004 area so that the entire text data 2018 converted into font data is within the display area of the balloon object 2004. Fig. 9C is a screen 2000 in which the balloon object 2004 area is expanded to the right because the entire text data 2018 does not fall within the size of the predefined balloon object 2004.

However, in the example of Fig. 9C, there is a rendering object 2012 having a stamp shape on the right side of the balloon object 2004. When the balloon object 2004 area is expanded too far in the rightward direction, the balloon object 2004 and the rendering object 2012 having a stamp shape overlap each other.

Accordingly, in the example of Fig. 9C, the balloon object manager 52 calculates the distance between the balloon object 2004 and the stamp-shaped rendering object 2012, and expands the balloon object 2004 area in the rightward direction by the length that the balloon object 2004 does not overlap the stamp-shaped rendering object 2012.

Further, the balloon object manager 52 expands the balloon object 2004 area downward as illustrated in Fig. 9D so that the entire text data 2018 falls within the display area of the balloon object 2004.

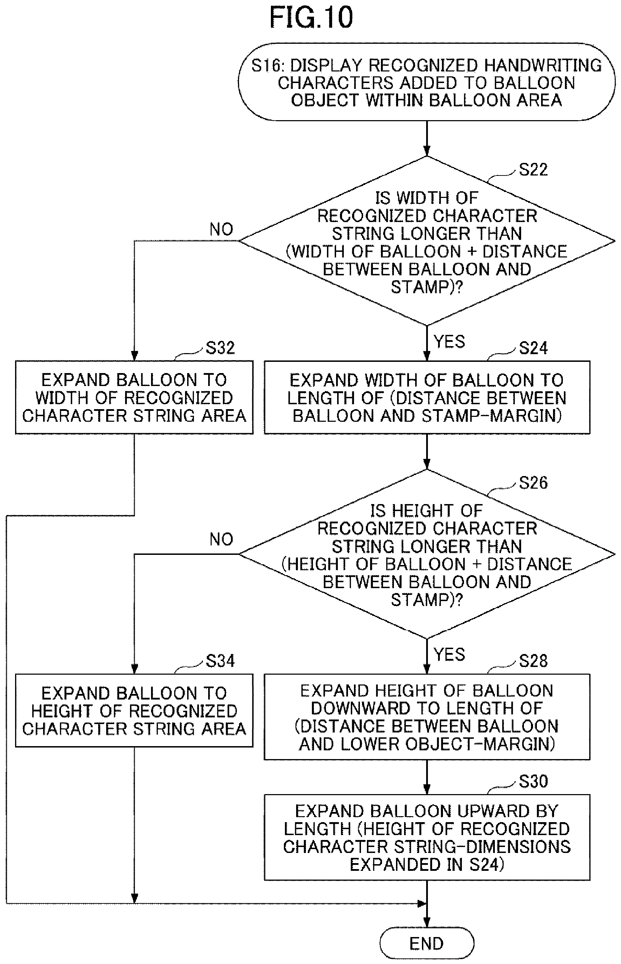

In the case of Figs. 9A to 9D, the process of step S16 of the flowchart illustrated in Fig. 8 is performed as illustrated in the flowchart of Fig. 10, for example. Fig. 10 is a flowchart illustrating an example of a process of an electronic blackboard in step S16.

When the user handwrites the character string 2016 "この課題は明日の会議で再検討する" so that the beginning of the writing is within the balloon object 2004 area, the rendering object manager 51 determines that the first stroke of the handwriting input detected by the handwriting input unit 40 "この課題は明日の会議で再検討する" falls within the balloon object 2004 area.

The rendering object manager 51 notifies the balloon object manager 52 that the handwriting input character string 2016 has been input to the balloon object 2004. The character recognizer 43 performs character recognition processing for each of "この", "課題", "は", "明日", "の", "会議", "で", "再検討", and "する" of the handwriting input, and outputs text data for each character.

When a predetermined time has elapsed from the handwriting input of "" the character recognizer 43 outputs a character recognition termination command including information on the size of the handwritten characters (handwriting characters). The character recognizer 43 determines the size of the handwriting characters when performing the character recognition processing, and determines an average (mean) size of the handwriting characters entered until a predetermined time has elapsed. The font size corresponding to the average size of the handwriting characters is included in the character recognition termination command.

When receiving the character recognition termination command, the balloon object manager 52 converts the text data 2018 recognized from the handwriting input character string 2016 into font data such as Gothic according to the font size included in the character recognition termination command.

Further, the balloon object manager 52 performs the processes from step S22 onwards so that the whole of the text data 2018 converted into font data enters the display area of the balloon object 2004.

In step S22, the balloon object manager 52 determines the width Ws of the character string area when the text data 2018 converted into font data is arranged side by side. The balloon object manager 52 queries the rendering object manager 51 to acquire the position (fxs, fys) (start-point coordinates) of the balloon object 2004 and the position (slxs, slys) (start-point coordinates) of the rendering object 2012 having the stamp shape (face-mark).

The balloon object manager 52 determines the value fw acquired by subtracting two margins fmx and sm from the distance (slxs-fxs) in the X-axis direction of the start-point coordinates of the balloon object 2004 and the start-point coordinates of the rendering object 2012. The value fw is the rightward expansion limit of the balloon object 2004 calculated by taking into account the position of the rendering object 2012.

The balloon object manager 52 compares the acquired width Ws and the value fw to determine whether or not the width Ws is longer than the value fw. When the width Ws is longer than the value fw, the balloon object manager 52 proceeds to step S24 and laterally expands the width Wf of the balloon object 2004 to (value fw + margin fmx × 2).

In step S26, the balloon object manager 52 divides the width Ws of the character string area by the value fw and rounds up the decimal point to be an integer. This integer is the number of rows of text data 2018 in the display area of the balloon object 2004. Next, the balloon object manager 52 determines the required height Hf of the balloon object 2004 from the font size, row count, and two margins fmy in the Y-axis direction.

Next, the balloon object manager 52 queries the rendering object manager 51 to acquire the position (fxs, fys) (start-point coordinates) of the balloon object 2004 and the position (s2xs, s2ys) (start-point coordinates) of the rendering object 2014 having the stamp shape (star-mark) located beneath the balloon object 2004.

The balloon object manager 52 determines the value fh acquired by subtracting the margin sm from the distance (s2ys-fys) in the Y-axis direction of the start-point coordinates of the balloon object 2004 and the start-point coordinates

of the rendering object 2014. The value fh is the downward expansion limit of the balloon object 2004 calculated by taking into account the position of the rendering object 2014.

The balloon object manager 52 compares the acquired height Hf with the value fh to determine whether or not the height Hf is longer than the value fh. When the height Hf is longer than the value fh, the balloon object manager 52 proceeds to step S28 and expands the height of the balloon object 2004 to the value fh.

Since the height Hf is longer than the value fh, which is the downward expansion limit of the balloon object 2004 calculated by taking into consideration the position of the rendering object 2014, in the expansion of the display area of the balloon object 2004 of step S28, all of the text data 2018 cannot be displayed in the display area of the balloon object 2004. Accordingly, the process proceeds to step S30, and the balloon object manager 52 expands the length (height Hf-value fh) in the upward direction so that the display area of the balloon object 2004 is the height Hf.

In step S22, when the width Ws is not longer than the value fw, the balloon object manager 52 proceeds to step S32 and expands the width Wf of the balloon object 2004 to the right so that all the character strings 2016 having the width Ws are displayed in the display area.

In step S26, when the height Hf is not longer than the value fh, the balloon object manager 52 proceeds to step S34 and expands the height Hf of the balloon object 2004 downward so that all of the character strings 2016 are displayed in the display area.

Note that the screens 2000 illustrated in Figs. 9A to 9D do not necessarily display all of the text data 2018 in the display area. For example, since Fig. 9C depicts an example of the screen 2000 in which the size of the display area of the balloon object 2004 is being changed, the text data 2018 in the display area may be partially undisplayed.

According to the second embodiment, when entering a character or a character string into the balloon object 2004 using handwriting recognition, the size of the display area of the balloon object 2004 can be changed according to the entered character or character string. Further, according to the second embodiment, the process of expanding the size of the display area of the balloon object 2004 can be performed so as not to overlap with the other rendering objects 2012 and 2014.

Thus, according to the second embodiment, the operability of the process of expanding the balloon object 2004, in which a character or a character string is input by handwriting recognition, to a range in which the balloon object 2004 does not overlap with other rendering objects 2012 and 2014 and displaying the expanded balloon object 2004 can be improved.

[Third Embodiment]

A third embodiment is an example where there is an additional rendering object of a character string above the balloon object 2004 in the second embodiment. In the second embodiment, all of the text data 2018 are displayed in the display area of the balloon object 2004 by expanding the balloon object 2004 in a rightward direction, a downward direction, and an upward direction in order not to overlap with the other rendering objects 2012 and 2014. According to the third embodiment, since there is an additional rendering object above the balloon object 2004, the balloon object 2004 is expanded in the order of a right, downward, and upward directions so that the balloon object 2004 does not overlap with the upper rendering object.

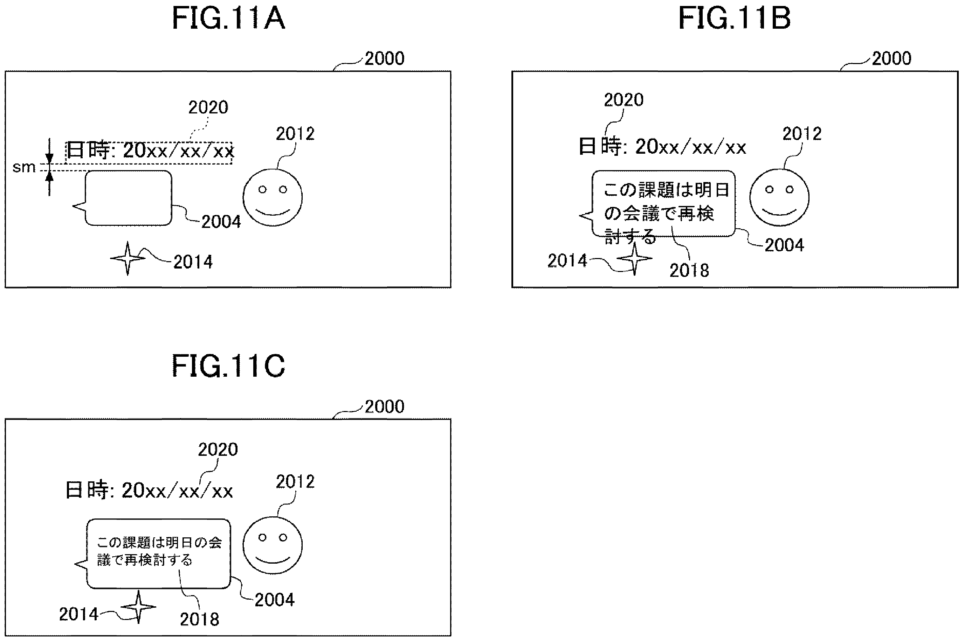

Figs. 11A to 11C are diagrams illustrating examples of input of a character or a character string to a balloon object using handwriting recognition. Figs. 11A to 11C illustrate a screen 2000 in which a rendering object 2020 of a character string "日時 : 20xx/xx/xx" meaning "Date and Time: 20xx/xx/xx" in Japanese is displayed on the upper side of the balloon object 2004 illustrated in Figs. 9A to 9D.

Fig. 11A is a screen 2000 in which a rendering object 2020 of a character string is displayed on the upper side of the balloon object 2004 illustrated in Fig. 9A.

Next, the user manually inputs (performs handwriting) the text string 2016 of the balloon object 2004 of Fig. 11A "この課題は明日の会議で再検討する" as illustrated in Fig. 9B, so that the beginning of handwriting of the character string is within the balloon object 2004 area.

The rendering object manager 51 refers to the rendering object management table and determines that the coordinates of the beginning of the handwriting input "この課題は明日の会議で再検討する" detected by the handwriting input unit 40 are within the balloon object 2004 area. The rendering object manager 51 determines that the handwriting input character string 2016 is input to the balloon object 2004 and associates the handwriting input character string 2016 with the balloon object 2004.

The rendering object manager 51 notifies the balloon object manager 52 that a handwriting input character string 2016 has been input to the balloon object 2004. The character recognizer 43 performs character recognition processing for each character of the handwriting input "この課題は明日の会議 で再検討する", and outputs text data for each character.

The character recognizer 43 outputs the character recognition termination command when a predetermined time has elapsed from the handwriting input of "この課題は明日の会議で再検討する". Upon receiving the character recognition termination command, the balloon object manager 52 converts the recognized text data 2018 from the handwriting input character string 2016 into font data such as Gothic.

Further, the balloon object manager 52 modifies (expands) the size of the balloon object 2004 area so that the entire text data 2018 converted into font data is within the display area of the balloon object 2004. In the screen 2000 illustrated in Fig. 11B, the expansion range of the balloon object 2004 is limited in comparison with the examples illustrated in Figs. 9A to 9D due to the rendering object 2020 of the character string above the balloon object 2004.

Accordingly, in the example of Fig. 11C, the font size of the text data 2018 is reduced so that the whole of the text data 2018 recognized from the handwriting input is within the display area of the balloon object 2004 after the balloon object 2004 is expanded to a range in which the balloon object 2004 does not overlap the other rendering objects 2012, 2014, and 2020.

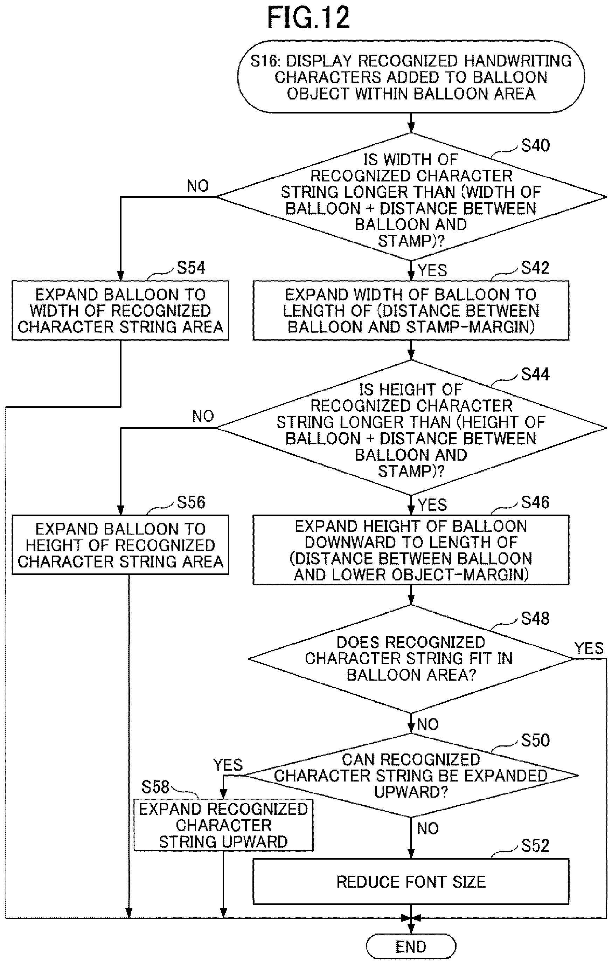

In the case of Figs. 11A to 11C, the process of step S16 of the flowchart illustrated in Fig. 8 is performed as illustrated, for example, in the flowchart of Fig. 12. Fig. 12 is a flowchart illustrating an example of the processing of an electronic blackboard in step S16. Since the flowchart illustrated in Fig. 12 is the same as the flowchart illustrated in Fig. 10 except for a part, the duplicated description will be appropriately omitted.

The processes of steps S40 to S46, S54, and S56 are identical to the processes of steps S22 to S28, S32, and S34 of Fig. 10. Following step S46, the process proceeds to step S48, and the balloon object manager 52 determines whether or not all of the text data 2018 is within the display area of the balloon object 2004 in the expansion of the display area of the balloon object 2004 of step S46.

In the expansion of the display area of the balloon object 2004 of step S46, when all of the text data 2018 is not accommodated within the display area of the balloon object 2004, the balloon object manager 52 performs the processes from step S50. In step S50, the balloon object manager 52 queries the rendering object manager 51 to acquire the positions (the start-point coordinates and the end-point coordinates) of the rendering object 2020 of the character string above the balloon object 2004.

Then, the balloon object manager 52 determines whether or not the Y-axis distance (fy-tlye) between the start-point coordinates of the balloon object 2004 and the end-point coordinates of the rendering object 2020 is greater than the margin sm. When the distance (fy-tlye) in the Y-axis direction of the rendering object 2020 and the balloon object 2004 is greater than the margin sm, the balloon object manager 52 determines that the display area of the balloon object 2004 can be expanded upward and proceeds to step S58. In step S58, the balloon object manager 52 expands the display area of the balloon object 2004 in an upward direction through the same process as in step S30 of Fig. 10.

When the distance (fy-tlye) in the Y-axis direction of the rendering object 2020 and the balloon object 2004 is smaller than the margin sm, the balloon object manager 52 determines that the display area of the balloon object 2004 cannot be expanded upward and proceeds to step S52. In step S52, the balloon object manager 52 reduces the font size of the text data 2018 such that the entire text data 2018 recognized from the handwriting input is within the display area of the balloon object 2004.

Note that the screens 2000 illustrated in Figs. 11A to 11C do not necessarily display all of the text data 2018 in the display area. For example, since Fig. 11B is an example of the screen 2000 in which the size of the display area of the balloon object 2004 is being changed, the text data 2018 in the display area may be partially undisplayed.

According to the third embodiment, when entering a character or a character string into the balloon object 2004 using handwriting recognition, the size of the display area of the balloon object 2004 can be changed according to the entered character or character string. Further, according to the third embodiment, the process of expanding the size of the display area of the balloon object 2004 can be performed so as not to overlap with other rendering objects 2012, 2014, and 2020. Further, according to the third embodiment, after expanding the size of the display area of the balloon object 2004 to a size that does not overlap with the other drawing objects 2012, 2014, and 2020, the font size of the characters can be reduced so as to fit within the display area of the balloon object 2004.

Thus, according to the third embodiment, the operability of the process of expanding the balloon object 2004 having a character or a character string being input by handwriting recognition (to avoid other rendering objects 2012, 2014, and 2020) so as not to overlap with other rendering objects 2012, 2014, and 2020 and displaying the balloon object 2004 can be improved.

[Fourth Embodiment]

A fourth embodiment is an example in which the balloon object 2004 is deformed and expanded to avoid other rendering objects 2012, 2014, and 2020 in order to efficiently take advantage of the margins.

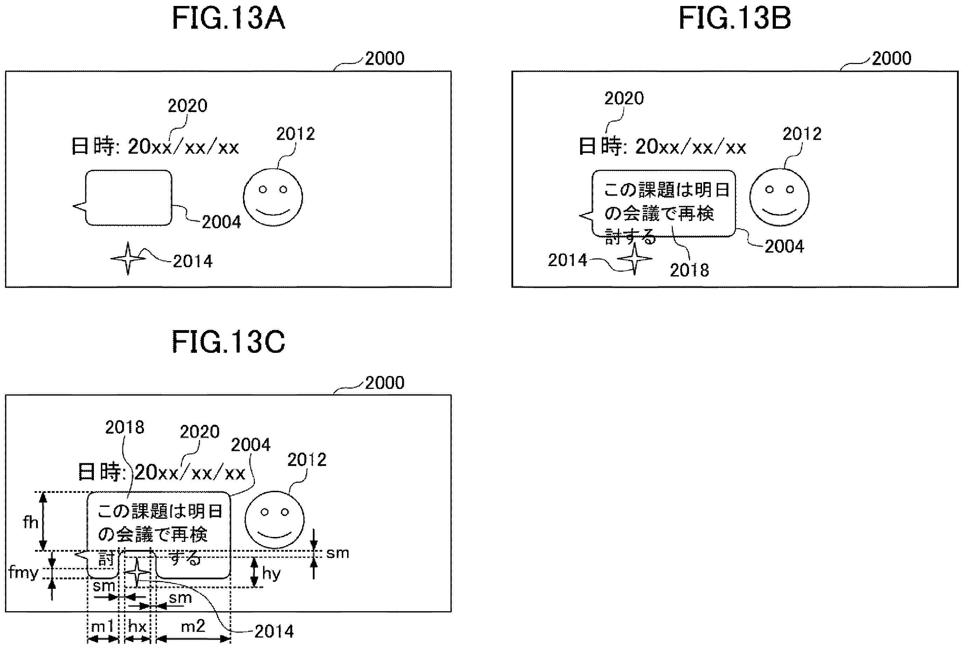

Figs. 13A to 13C are diagrams illustrating examples of input of a character or a character string to a balloon object using handwriting recognition. Fig. 13A is identical to Fig. 11A. Fig. 13B is identical to Fig. 11B.

The balloon object manager 52 modifies (expands) the size of the balloon object 2004 area so that the entire text data 2018 converted into font data is within the display area of the balloon object 2004. However, since the expansion range of the balloon object 2004 is limited as illustrated in Fig. 13B, the entire text data 2018 cannot be displayed to fit within the display area of the balloon object 2004.

Accordingly, in the example of Fig. 13C, the entire text data 2018 recognized from the handwriting input is displayed within the display area of the balloon object 2004 by deforming and expanding the balloon object 2004 (to avoid other rendering objects 2012, 2014, and 2020) so as not to overlap with other rendering objects 2012, 2014, and 2020.

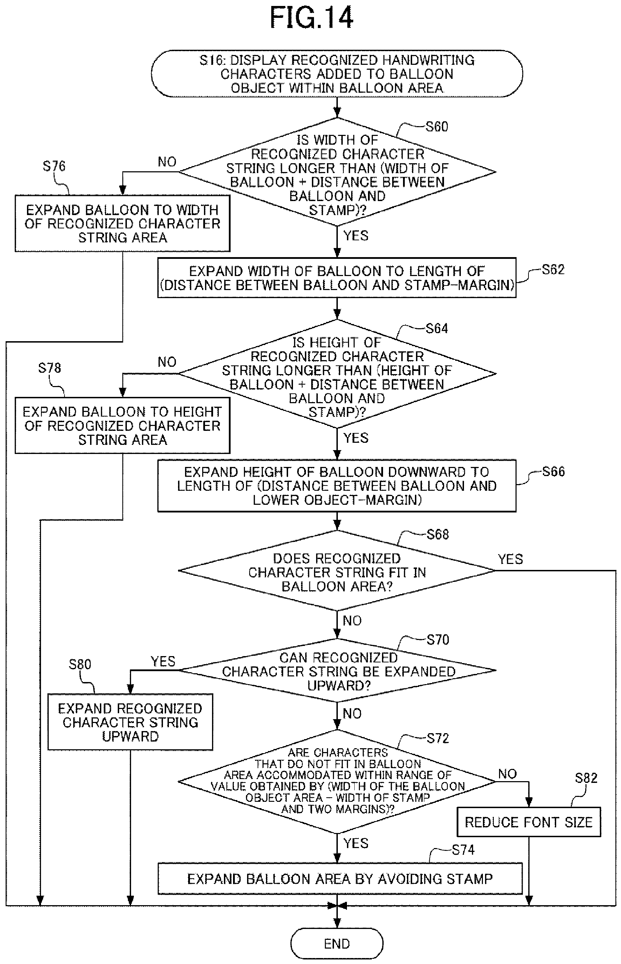

In the case of Figs. 13A to 13C, the process of step S16 of the flowchart illustrated in Fig. 8 is performed as illustrated in the flowchart of Fig. 14, for example. Fig. 14 is a flowchart illustrating an example of the process of an electronic blackboard in step S16. Since the flowchart illustrated in Fig. 14 is the same as the flowchart illustrated in Fig. 12 except for a part thereof, the duplicated description will be appropriately omitted.

The processes of steps S60 to S70 and S76 to S80 in Fig. 12 are identical to the processes of steps S40 to S50 and S54 to S58. In step S70, when the balloon object manager 52 determines that the display area of the balloon object 2004 cannot be expanded upward, the balloon object manager 52 proceeds to step S72.

In step S72, the balloon object manager 52 acquires the position information of all rendering objects from the rendering object manager 51. Then, the balloon object manager 52 confirms that only the rendering object 2014 having the stamp shape (star-mark) is present beneath the balloon object 2004.

Subsequently, when the height of the display area of the balloon object 2004 is set to fh, the balloon object manager 52 examines characters of text data 2018 that do not fit into the display area of the balloon object 2004. In the example of Fig. 13B, the last three characters of the text data 2018 are determined as characters of the text data 2018 that do not fit within the display area of the balloon object 2004.

The balloon object manager 52 determines whether or not the last three characters of the text data 2018 enter the range of the value (m1 + m2) obtained by subtracting the width hx of the rendering object and the two margins sm from the width Wf of the balloon object 2004 on a single line.

When the balloon object manager 52 determines that the last three characters of the text data 2018 are entered on a single line, the balloon object manager 52 expands the display area of the balloon object 2004 downward, by avoiding the rendering object 2014, through the process of step S74.

The balloon object manager 52 obtains a range m1 between the x coordinate of the start-point coordinates of the balloon object 2004 and the x-coordinate obtained by subtracting the margin sm from the x-coordinate of the start-point coordinates of the rendering object 2014.

The balloon object manager 52 expands the balloon object 2004 by a distance (the height of characters + a margin fmy in the Y-axis direction in the display area of the balloon object 2004) for the determined range m1.

The balloon object manager 52 determines a range m2 from the x-coordinate of the end-point coordinates of the rendering object 2014 to the x-coordinate obtained by adding the margin sm to the x-coordinate of the end-point coordinates of the balloon object 2004.

The balloon object manager 52 expands the balloon object 2004 by a distance (the height of characters + a margin fmy in the Y-axis direction in the display area of the balloon object 2004) for the determined range m2.

Then, as illustrated in Fig. 13C, the balloon object manager 52 modifies the rendering data so that one character

of the "する" enters the left expansion area and the two characters of the "する" enters the right expansion area. Accordingly, the display controller 44 can display the screen 2000 of Fig. 13C on the display unit 10.

When the balloon object manager 52 determines in step S72 that the last three characters "討する" of the text data 2018 are not entered on a single line, the balloon object manager 52 performs the process of step S82. In step S82, the balloon object manager 52 reduces the font size of the text data 2018 such that the entire text data 2018 recognized by the handwriting input is within the display area of the balloon object 2004.

Note that the screens 2000 illustrated in Figs. 13A to 13C do not necessarily display all of the text data 2018 in the display area. For example, since Fig. 13B depicts an example of the screen 2000 in which the size of the display area of the balloon object 2004 is being changed, the text data 2018 in the display area may be partially undisplayed.

According to the fourth embodiment, when entering a character or a character string into the balloon object 2004 using handwriting recognition, the size of the display area of the balloon object 2004 can be changed according to the entered character or character string. In addition, according to the fourth embodiment, the process of expanding the size of the display area of the balloon object 2004 can be performed by modifying the balloon object 2004 to avoid other rendering objects 2012, 2014, and 2020. Further, according to the fourth embodiment, the size of the display area of the balloon object 2004 can be increased to a size that does not overlap with other rendering objects 2012, 2014, and 2020, and the font size of the characters can be reduced to fit within the display area of the balloon object 2004.

Thus, according to the fourth embodiment, the operability of the process of displaying the balloon object 2004 in which a character or a character string is input by handwriting recognition by expanding the balloon object 2004 to an extent that does not overlap with other rendering objects 2012, 2014, and 2020 can be improved.

[Fifth Embodiment]

According to the second to fourth embodiments, the balloon object 2004 is expanded so as not to overlap with other rendering objects such as rendering objects 2012, 2014, and 2020, thereby displaying a handwriting character string in the display area of the balloon object 2004. According to a fifth embodiment, other rendering objects around the balloon object 2004 move to avoid the balloon object 2004 as the balloon object 2004 expands.

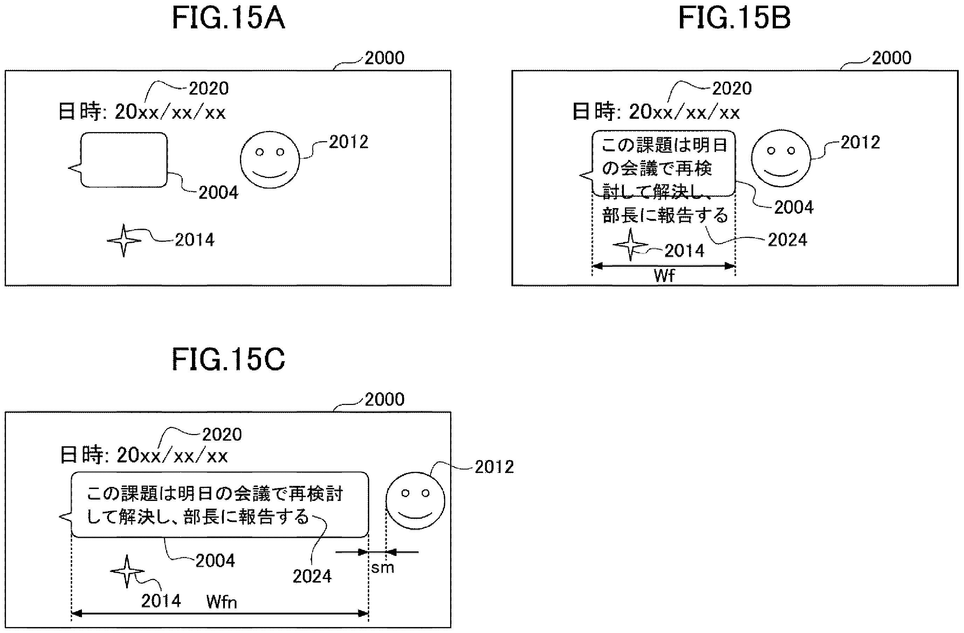

Figs. 15A to 15C are diagrams illustrating examples of input of a character or a character string to a balloon object using handwriting recognition. Fig. 15A is identical to Fig. 13A. Next, as in Fig. 9B, the user manually enters the beginning of a character string

„この課題は明日の会議で再検討して解決 し、部長に報告する" meaning "This issue will be reviewed and resolved at tomorrow's meeting and reported to the director" in Japanese into the balloon object 2004 area of Fig. 15A.

The rendering object manager 51 refers to the rendering object management table and determines that the coordinates of the beginning of the handwriting input

„この課題は明日の会議で再検討して解決し、部　長に報告する'" detected by the handwriting input unit 40 are within the balloon object 2004 area. The rendering object manager 51 determines that the handwriting character string is input to the balloon object 2004 and associates the handwriting character string with the balloon object 2004.

The rendering object manager 51 notifies the balloon object manager 52 that the handwriting character string has been input to the balloon object 2004. The character recognizer 43 performs character recognition processing for each of characters of a handwriting character string

„この課題は明日の会議で再検討 して解決し、部長に報告する", and outputs text data for each of these characters.

When a predetermined time has elapsed from the handwriting input, the character recognizer 43 outputs the character recognition termination command. Upon receiving the character recognition termination command, the balloon object manager 52 converts the text data 2024 recognized from the handwriting character string into font data such as Gothic.

Further, the balloon object manager 52 modifies (expands) the size of the balloon object 2004 area so that the whole of the text data 2024 converted into font data is within the display area of the balloon object 2004. In the screen 2000 of Fig. 15B, the expansion range of the balloon object 2004 is limited by other rendering objects 2012, 2014, and 2020 around the balloon object 2004, so that the entire text data 2024 does not fit within the display area of the balloon object 2004.

In the example of Fig. 15C, the balloon object 2004 is expanded laterally and the rendering object 2012 located next to the balloon object 2004 is moved laterally to avoid the balloon object 2004. When the rendering object 2012 cannot be moved laterally (when it has already moved to the right end of the screen 2000), the balloon object 2004 may be further expanded downward. In this case, the rendering object 2014 below the balloon object 2004 moves laterally to avoid the balloon object 2004.

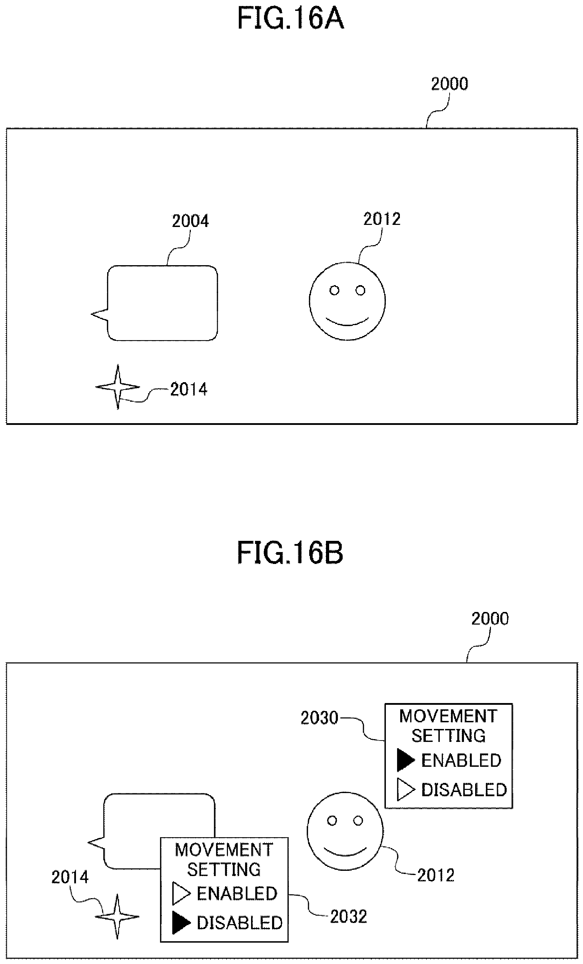

In the fifth embodiment, for example, as illustrated in Fig. 16B, the movement setting can be applied to each of the rendering objects 2012 and 2014. Figs. 16A and 16B are diagrams illustrating an example of the movement setting applied with respect to a rendering object.

When a user presses and holds the rendering object 2012, for example, a movement setting menu 2030 for the rendering object 2012 is displayed, as illustrated in Fig. 16B. When the user presses and holds the rendering object 2014, for example, a movement setting menu 2032 for the rendering object 2014 is displayed, as illustrated in Fig. 16B.

The user can set whether to enable or disable the movement of the rendering object 2012, for example, from the movement setting menu 2030 for the rendering object 2012. The user can also set whether to enable or disable the movement of the rendering object 2014 from, for example, the movement setting menu 2032 for the rendering object 2014.

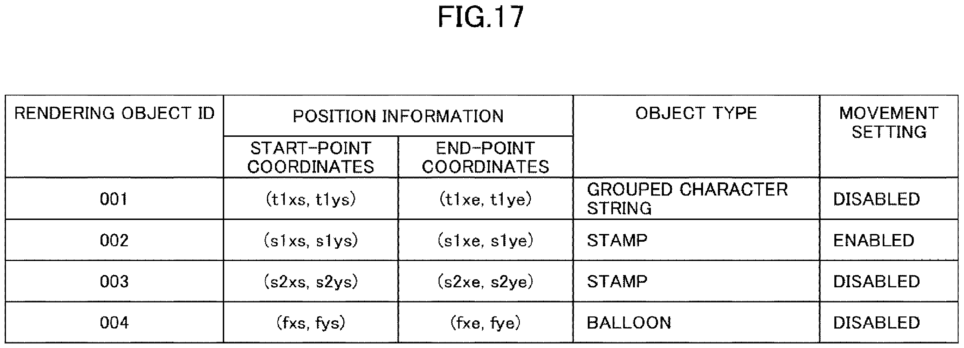

The movement setting for rendering objects 2012 and 2014 are managed in association with the rendering objects 2012 and 2014 in the rendering object management table, for example, illustrated in Fig. 17. Fig. 17 is a configuration diagram of an example of a rendering object management table.

The rendering object management table illustrated in Fig. 17 has a configuration in which "movement setting" is added to the item of the rendering object management table illustrated in Fig. 6. The item "movement setting" includes "enable/disable" that is managed as the setting information for each rendering object. For example, the rendering object with the rendering object ID "002" in Fig. 17 represents the rendering object 2012 in Fig. 16. For example, the rendering object with the rendering object ID of "003" in Fig. 17 represents the rendering object 2014 in Fig. 16.

In the example of Fig. 17, the movement setting of the rendering object 2012 on the right side of the balloon object 2004 is set to be "enabled", so that the rendering object 2012 can be moved to avoid expansion of the balloon object 2004. Further, in the example of Fig. 17, since the movement setting of the rendering object 2014 beneath the balloon object 2004 is set to "disabled", the rendering object 2014 cannot be moved to avoid the expansion of the balloon object 2004.

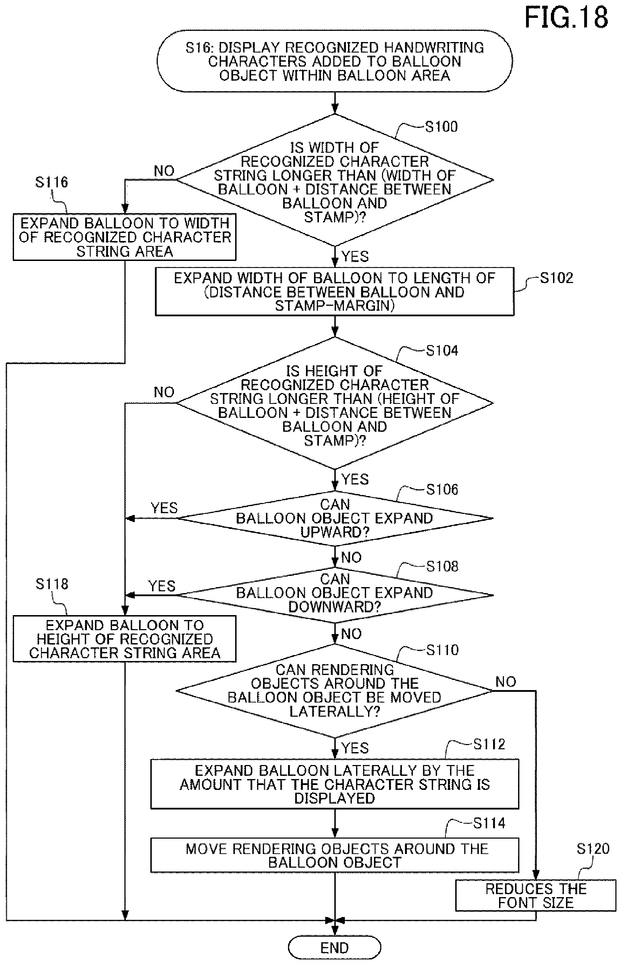

In the case of Figs. 15A to 15C, the process of step S16 of the flowchart illustrated in Fig. 8 is performed as illustrated, for example, in the flowchart of Fig. 18. Fig. 18 is a flowchart illustrating an example of the process of an electronic blackboard in step S16 of Fig. 8. Since the flowchart illustrated in Fig. 18 is the same as the flowchart illustrated in Fig. 14 except for a part thereof, the description will be omitted where appropriate.

The processes of steps S100 to S104 and S116 are identical to the processes of steps S60 to S64 and S76 of Fig. 14. Similar to the fourth embodiment, in steps S100 to S102, the balloon object manager 52 determines whether the balloon object 2004 can be expanded upward or downward in steps S104 to S108 after expanding the balloon object 2004 to the right.

In the example of Fig. 15B, in step S106, the balloon object manager 52 determines that the balloon object 2004 cannot be expanded in the upward direction because the distance from the rendering object 2020 located above the balloon object 2004 to the balloon object 2004 is small. In the example of Fig. 15B, in step S108, the balloon object manager 52 checks whether or not the balloon object 2004 can be expanded downward.

That is, the balloon object manager 52 calculates the value fh acquired by subtracting the margin sm from a distance (s2ys-fys) in the Y-axis direction of the start-point coordinates of the balloon object 2004 and the start-point coordinates of the rendering object 2014 having the stamp shape (star-mark).

The balloon object manager 52 compares the acquired value fh with the required height Hf of the balloon object 2004, and determines whether or not the height Hf is longer than the value fh. For example, in the example of Fig. 15B, the balloon object manager 52 determines that the height Hf is longer than the value fh. When the height Hf is longer than the value fh, the balloon object 2004 even expanding downward will not fit within the display area of the balloon object 2004. Accordingly, the balloon object manager 52 proceeds to the process of step S110, which is a further process for putting the entire text data 2024 within the display area of the balloon object 2004.

Meanwhile, when the height Hf is shorter than the value fh, the balloon object manager 52 expands the balloon object 2004 downward, so that the whole of the text data 2024 falls within the display area of the balloon object 2004. Accordingly, the balloon object manager 52 proceeds to step S118 and expands the height Hf of the balloon object 2004 downward so that the entire text data 2024 fits in the display area. When it is possible to expand the balloon object 2004 in the upward direction in step S106, the process proceeds to step S118.

In step S110, the balloon object manager 52 refers to an item "movement setting" of the rendering object management table illustrated in Fig. 17, and finds the rendering object 2012 that has the movement setting "enabled" and can be moved laterally from the rendering objects 2012 and 2014 around the balloon object 2004.

When it is not possible to find a rendering object that can be moved laterally in step S110, the process proceeds to step S120, and the balloon object manager 52 reduces the font size of the text data 2018 so that the whole recognized text data 2024 of the characters is within the display area of the balloon object 2004. When it is possible to find a rendering object that can be moved laterally in step S110, in steps S112 and S114, the balloon object manager 52 performs a further process for putting the whole text data 2024 in the display area of the balloon object 2004 as illustrated in Fig. 15C.

When the rendering object 2012 that can be moved laterally is found, the process proceeds to step S110 to step S112, and the balloon object manager 52 determines that the number of rows corresponding to the height fh of the balloon object 2004 that is expanded downward is two rows.

In addition, the balloon object manager 52 calculates the balloon width Wfn when two lines of a character string of "この課題は明日の会議で再検討して解決し、部長に報告する" are to be displayed in the display area of the balloon object 2004. The calculated width Wfn is the width Ws + margin fmx $\times$ 2 of the character string area.

The balloon object manager 52 requests the rendering object manager 51 to move the rendering object 2012 to the right of the balloon object 2004 by the value of the width Wfn - width Wf. The rendering object manager 51 replaces the x coordinate value of the start-point coordinates of the rendering object 2012 with the value acquired by adding the value of the width Wfn - width Wf, and changes the rendering data so that the rendering object 2012 is displayed from the start-point coordinates obtained after the x coordinate value of the start-point coordinates of the rendering object 2012 is replaced.

The display controller 44 displays a screen 2000 in which the rendering object 2012 having the stamp shape (face-mark) moves to the position of the replaced start-point coordinates of the rendering object 2012 on the display unit 10. Further, the balloon object manager 52 replaces the x-coordinate value of the end-point coordinates of the balloon object 2004 with a value acquired by adding the value of the width Wfn - width Wf, and changes the display area of the balloon object 2004 to the corresponding size .

In addition, the display controller 44 displays a screen 2000 in which two lines of a text string of „この課題は明日の会議で再検討して解決し、部長に報告する " is displayed in the display area of the balloon object 2004 with the size being changed.

Thus, according to the fifth embodiment, since the other rendering objects 2012, 2014, and 2020 so as to avoid the balloon object 2004 in which a character or a character string is input by handwriting recognition can be moved, the operability of the process of expanding and displaying the balloon object 2004 in a range in which the balloon object 2004 does not overlap the other rendering objects 2012, 2014, and 2020 can be improved.

[Sixth Embodiment]

A sixth embodiment describes a case in which the balloon object 2004 is added to the right side of the rendering object 2006 (see FIG. 7B) in which the object type is "grouped character string" as in the first embodiment, and further describes a case in which the rendering object 2012 and the balloon object 2040 supplementing the rendering object 2012 are present on the right side of the balloon object 2004.

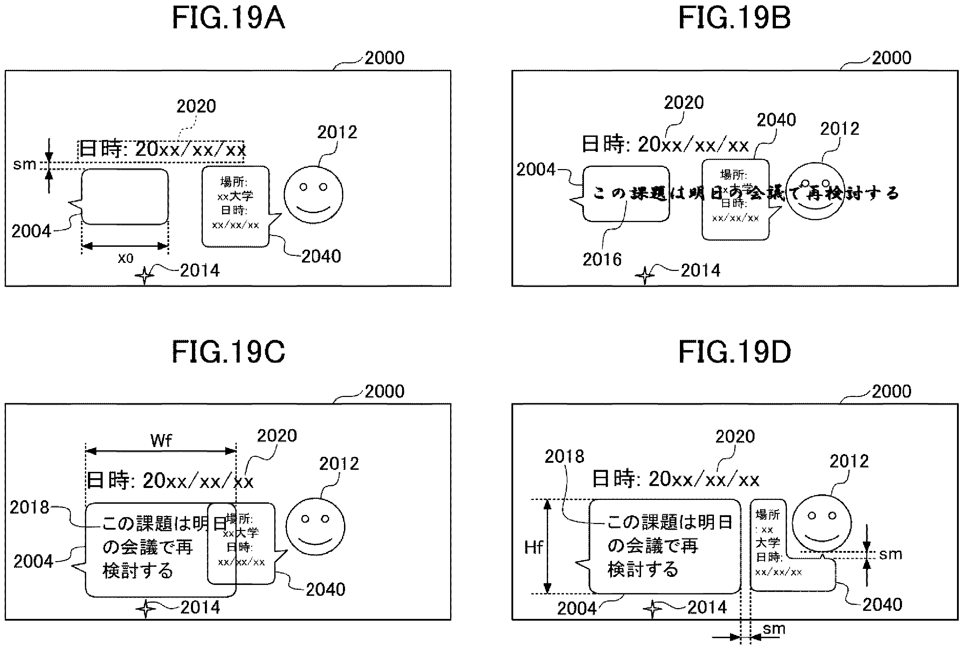

Figs. 19A to 19D are diagrams illustrating examples of a character or a character string input to a balloon object using handwriting recognition. Fig. 19A is a screen 2000 in which the balloon object 2004 is displayed on the right side of the rendering object 2006 (see FIG. 7B). Next, the user manually inputs (handwrites) a text string 2016 „この課題は明日の 会議で再検討する " meaning "This issue will be reviewed at tomorrow's meeting" in Japanese with respect to the balloon object 2004 of Fig. 19A such that the beginning of the handwriting of text string 2016 is within the balloon object 2004 area, as illustrated in Fig. 19B.

The handwriting input character string 2016 is recognized. Note that it is assumed that text data 2018 output by character recognition could not fit entirely within the display area of the predefined balloon object 2004. Thus, the size of the balloon object 2004 area is expanded so that the entire text data 2018 is within the display area of the balloon object 2004, as illustrated in Fig. 19C.

When the rendering object manager 51 detects that the balloon object 2004 overlaps the balloon object 2040, the rendering object manager 51 notifies the object manager 52 of information about the overlap area. The balloon object manager 52 determines the shape of the balloon object 2040 such that the overlap area is eliminated. The balloon object manager 52 modifies the rendering data of the balloon object 2040 so as to have a shape of the balloon object 2040 illustrated in Fig. 19D, for example.

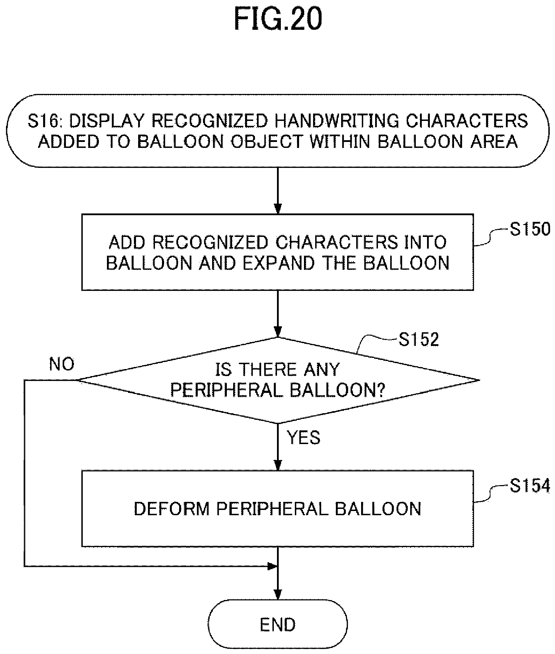

In the case of Figs. 19A to 19D, the process of step S16 of the flowchart illustrated in Fig. 8 is performed as illustrated in the flowchart of Fig. 20, for example. Fig. 20 is a flowchart illustrating an example of the process of an electronic blackboard in step S16. In Fig. 19A, the start-point coordinates of the balloon object 2004 are (f1xs, f1ys). The start-point coordinates of the balloon object 2040 are (f2xs, f2ys).

When a user handwrites a character string 2016 of "この課題は明日の会議で再検討する " so that the beginning of the handwriting is within the balloon object 2004 area, the rendering object manager 51 determines that the first stroke of the handwriting input "この課題は明日の会議で再検討する " detected by the handwriting input unit 40 is within the balloon object 2004 area.

The rendering object manager 51 notifies the balloon object manager 52 that the handwriting input character string 2016 has been input to the balloon object 2004. The character recognizer 43 performs a character recognition process for each of "この", "課題", "は", "明日", "の", "会議", "で", "再検討", and "する", for example, of the handwriting input character string "この課題は明日の会議で再検討する" and outputs text data on a per character basis.

When a predetermined time has elapsed from the handwriting input of "この課題は明日の会議で再検討する", the character recognizer 43 outputs a character recognition termination command including information on the size of the handwriting character string. The character recognizer 43 determines the size of the handwriting character string while performing the character recognition process, and determines an average (mean) size of the handwriting characters that have been input by the time at which a predetermined time has elapsed. The font size corresponding to the average (mean) size of the handwriting characters is included in the character recognition termination command.

When receiving the character recognition termination command, the balloon object manager 52 converts the text data 2018 recognized from the handwriting input character string 2016 into font data such as Gothic according to the font size included in the character recognition termination command.

When the balloon object manager 52 determines that the whole text data 2018 converted to the font data is not accommodated within the display area of the balloon object 2004, the balloon object manager 52 performs the processes in step S150 onward.

In step S150, the balloon object manager 52 acquires position information of all the rendering objects from the rendering object manager 51. The balloon object manager 52 confirms that the balloon object 2040 is located on the right of the balloon object 2004, that the rendering object 2020 is located above the balloon object 2004, and that the stamp shape (star-mark) rendering object 2014 is located beneath the balloon object 2004.

Similar to the third embodiment, the balloon object 2004 cannot be expanded upward, and the height of the balloon object 2004 is expanded downward so that the height of the balloon object 2004 meets the value Hf obtained by subtracting the margin sm from the distance (s2ys-fys) in the Y-axis direction of the start-point coordinates of the balloon object 2004 and the start-point coordinates of the stamp shape (star-mark) rendering object 2014 located beneath the balloon object 2004.

Then, the balloon object manager 52 calculates the width of the balloon object 2004 so that the recognized text data 2018 fits within the display area of the balloon object 2004. This width is Wf as in the second embodiment. In order for the balloon object 2004 to have the width Wf, the balloon object 2004 needs to be expanded to the right by the length of the width (Wf-X0). In step S152, when there is a balloon object in the expanding direction (Yes in step S152), the balloon object manager 52 performs a process of step S154. In step S152, when there is no balloon object in the expanding direction, the balloon object manager 52 skips the process of step S154.

In the example of Figs. 19A to 19D, when there is a balloon object 2040 in the direction, and the balloon object 2004 is expanded to the right by the length of the width (Wf-X0), the balloon object 2004 overlaps with the balloon object 2040 as illustrated in Fig. 19C. The width X0 is a width (predefined width) when the balloon object 2004 is first displayed on the screen 2000 by selecting an icon 2002.

The balloon object manager 52 changes the start-point coordinates of the balloon object 2040 from (f2xs, f2ys) to (flxs + Wf + sm, f2ys) to reduce the width of the balloon object 2040. The character string displayed within the display area of the balloon object 2040 exceeds beyond the display area of the balloon object 2040 by reducing the width of the balloon object 2040.

Accordingly, the balloon object manager 52 expands the balloon object 2040 downward so that the height of the balloon object 2040 is the same height as the height Hf of the balloon object 2004, and also expands the balloon object 2040 to the lower right side of the stamp shape (face-mark) rendering object 2012, as illustrated in Fig. 19D.

That is, the balloon object manager 52 expands the display area below the position (f2xe, slye+sm) of the balloon object 2040 to the right so that the character string "場所：xx 大学日時：xx/xx/x" is accommodated within the display area of the balloon object 2040, wherein f2xe is the x component of the end-point coordinates of the balloon object 2040, slye is the y component of the end-point coordinates of the stamp shape (face-mark) rendering object 2012, and sm is the margin. As illustrated in Fig. 19D, the balloon object 2040 may be further expanded downward without expanding in the rightward direction.

Thus, according to the sixth embodiment, the operability of the process of expanding and displaying the balloon object 2004 can be improved by deforming the other balloon object 2040 to avoid the balloon object 2004 in which a character or a character string is input by hand recognition.

<Challenges and Effects>

Conventionally, when the balloon object overlaps with a rendering object such as a stamp, it is inconvenient for the user to shift the position or change the size of the balloon object. In addition, when the balloon object overlaps with a rendering object such as a stamp, viewability is poor.

According to the first to sixth embodiments described above, since it is possible to change the shape of the balloon object so that the balloon object does not overlap with the rendering object, such as a stamp, without shifting the position or changing the size of the balloon object, it is effective for the user to improve visibility.

<Another Example 1 of Input Device Configuration>

The input device according to this embodiment is described as having a large touch panel, but the input device is not limited to those having a touch panel.

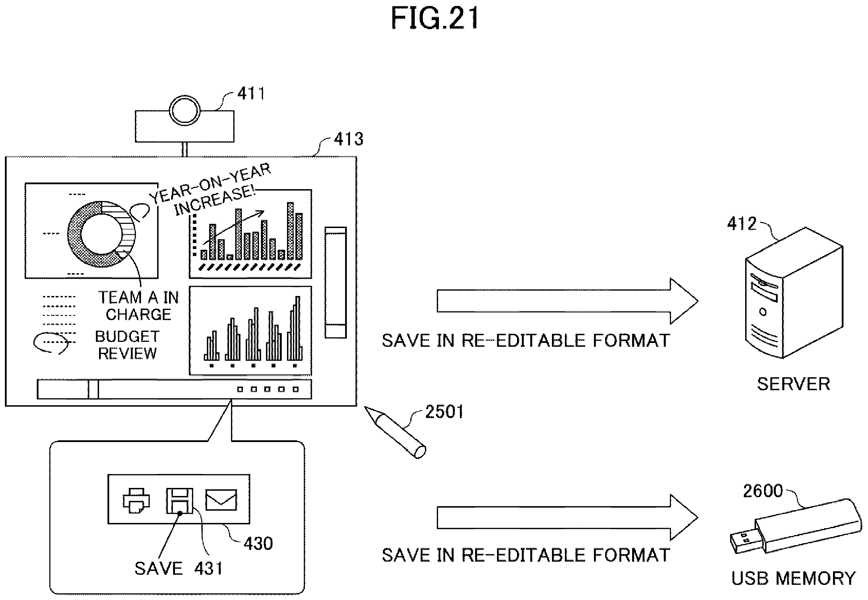

Fig. 21 is a diagram illustrating another configuration example of an input device. In Fig. 21, a projector 411 is located above a typical whiteboard 413. This projector 411 corresponds to the input device. A typical whiteboard 413 is not a flat panel display integrated with a touch panel, but rather a white board that is handwritten directly by a user using a marker. The whiteboard may be a blackboard insofar as the blackboard a flat surface large enough to project images.

The projector 411 has an optical system with an ultra-short focal point so that images of about 10 cm to less distortion can be projected onto the whiteboard 413. The images may be transmitted from a wireless or wired PC or may be stored by a projector 411.

The user handwrites on the white board 413 using a dedicated electronic pen 2501. The electronic pen 2501 has a light emitting portion at a tip portion, for example, where a switch is turned on upon a user pressing against the white board 413 for handwriting. The wavelength of the light is near-infrared or infrared, so the light is invisible to the user. The projector 411 includes a camera that captures the light emitting portion to analyze the image of the light emitting portion to determine the direction of electron pen 2501.

The electron pen 2501 emits a sonic wave together with a light emission, and the projector 411 calculates a distance according to the time of arrival of the sonic wave. The orientation and distance permit the location of the electron pen 2501. A stroke is rendered (projected) at the position of the electron pen 2501.

The projector 411 projects a menu 430, so that when a user presses a button with the electronic pen 2501, the projector 411 identifies the position of the electronic pen 2501 and the button pressed by the ON signal of the switch. For example, when the save button 431 is pressed, a user's handwriting stroke (a set of coordinates) is stored in the projector 411.

The projector 411 stores handwriting information on a predetermined server 412 or USB memory 2600 or the like. Handwriting information is stored for each page. Since the coordinates are saved instead of image data, the user can re-edit the image. In this embodiment, however, the menu 430 is not required to be displayed because the operation commands can be called by hand.

<Example 2 of Input Device Configuration>

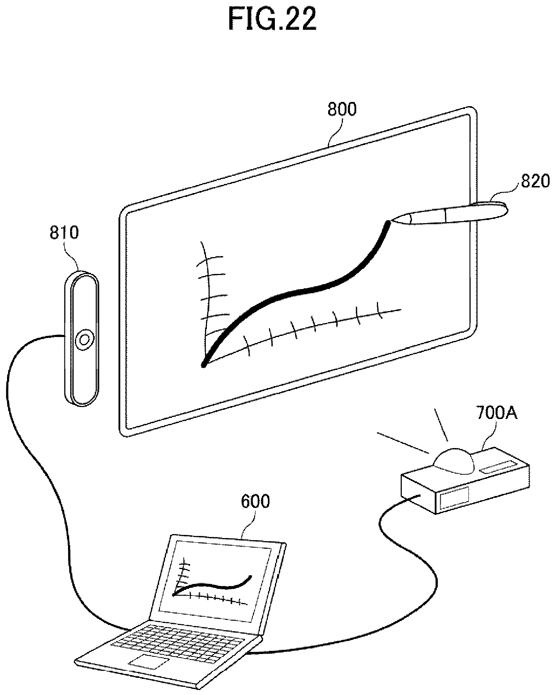

Fig. 22 is a diagram illustrating another configuration example of an input device. In the example of Fig. 22, an input device includes a terminal device 600, an image projector device 700A, and a pen motion detector 810.

The terminal device 600 is wired to the image projector device 700A and the pen motion detector 810. The image projector device 700A projects the image data input by the terminal device 600 onto the screen 800.

The pen motion detector 810 is in communication with the electronic pen 820 and detects an operation of the electronic pen 820 in the vicinity of the screen 800. Specifically, the electronic pen 820 detects coordinate information representing a point indicated by the electronic pen 820 on the screen 800 and transmits the coordinate information to the terminal device 600.

The terminal device 600 generates image data of stroke image input by the electronic pen 820 based on the coordinate information received from the pen motion detector 810 and causes the image projector device 700A to render the stroke image on the screen 800.

The terminal device 600 generates superimposed image data representing a superimposed image composed of a background image projected onto the image projector device 700A and a stroke image input by the electronic pen 820.

<Another Example 3 of Input Device Configuration>

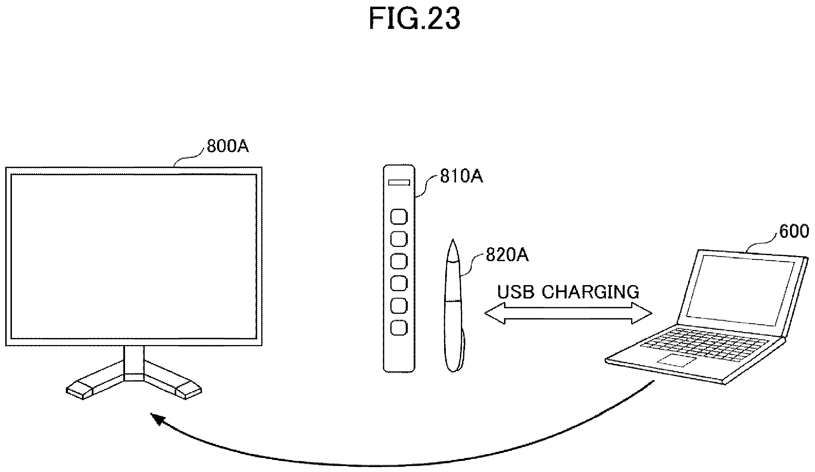

Fig. 23 is a diagram illustrating an example of a configuration of an input device. In the example of Fig. 23, an input device includes a terminal device 600, a display 800A, and a pen motion detector 810.

The pen motion detector 810 is disposed near a display 800A and detects coordinate information representing a point indicated by the electronic pen 820A on the display 800A and transmits the coordinate information to the terminal device 600. In the example of Fig. 23, the electronic pen 820A may be charged by the terminal device 600 via a USB connector.

The terminal device 600 generates image data of a stroke image input by the electronic pen 820A and displays the image data on the display 800A based on coordinate information received from the pen motion detector 810.

<Another Example 4 of Input Device Configuration>

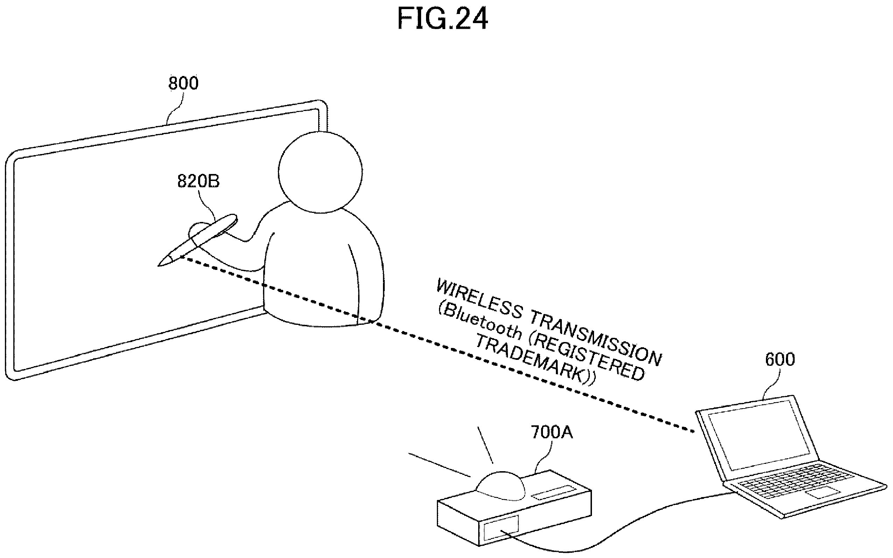

Fig. 24 is a diagram illustrating an example of a configuration of an input device. In the example of Fig. 24, an input device includes a terminal device 600 and an image projector device 700A.

The terminal device 600 performs wireless communication (such as Bluetooth) with an electronic pen 820B and receives coordinate information of a point indicated by the electronic pen 820B on the screen 800. The terminal device 600 generates image data of a stroke image input by the electronic pen 820B based on the received coordinate information and causes the image projector device 700A to project the stroke image.

The terminal device 600 generates superimposed image data representing a superimposed image composed of a background image projected onto the image projector device 700A and a stroke image input by the electronic pen 820.

As described above, each of the above-described embodiments can be applied in various system configurations.

<Other Applications>

While the preferred embodiment of the present invention has been described with reference to examples, various modifications and substitutions may be made thereto without departing from the spirit and scope of the invention.

For example, although an electronic blackboard has been described in this embodiment as an example, an information processing apparatus having a touch panel can be suitably applied. Devices that have the same functions as an electronic blackboard are also referred to as electronic whiteboards, electronic information boards, and interactive boards. The information processing apparatus having the touch panel installed therein may be, for example, an output device such as a PJ (Projector), a digital signage, an HUD (Head Up Display) device, an industrial machine, an imaging device, a sound collector, a medical device, a network home appliance, a personal computer, a cellular phone, a smartphone, a tablet terminal, a game machine, a PDA (Personal Digital Assistant), a digital camera, a wearable PC, or a desktop PC.

In this embodiment, the coordinates of the tip of the pen are detected by the touch panel, but the coordinates of the tip of the pen may be detected by ultrasound. The pen emits ultrasonic waves along with the light emission, and the input device calculates the distance according to the time of arrival of the ultrasonic waves. The input device can locate the pen according to direction and distance. In this case, the projector renders (projects) the pen's locus as a stroke.

Further, the configuration examples illustrated in Figs. 1 to 4 are divided according to the main functions in order to facilitate understanding of the processing by the electronic blackboard 1. The invention of the present application is not limited by the method of dividing the processing unit or by the name. The processing of the electronic blackboard 1 may be divided into more processing units depending on the processing contents. Alternatively, one processing unit can be split into multiple unit to include more processing.

Hereinafter, a PC that is an example of an input device that receives keyboard input from a user will be described. In the following embodiment, a user enters characters via a keyboard instead of the touch panel 11.

[Seventh Embodiment]

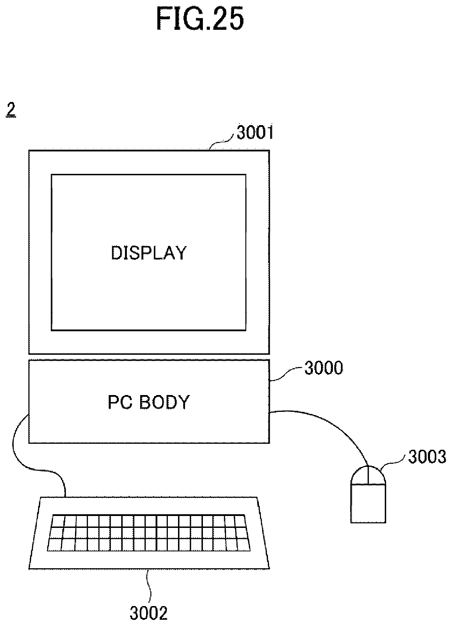

The overall configuration of the PC2 according to the embodiment of the present invention will be described with reference to Fig. 25. Fig. 25 is an overall configuration diagram illustrating an example of a PC according to the present embodiment. PC2 is configured to include a PC main body 3000, a display 3001, a keyboard 3002, and a mouse 3003. The mouse 3003 is an example of a pointing device used to manipulate pointers, icons, or the like displayed on a screen. Fig. 25 is an example of a configuration in which other peripheral devices are connected to the PC main body 3000.

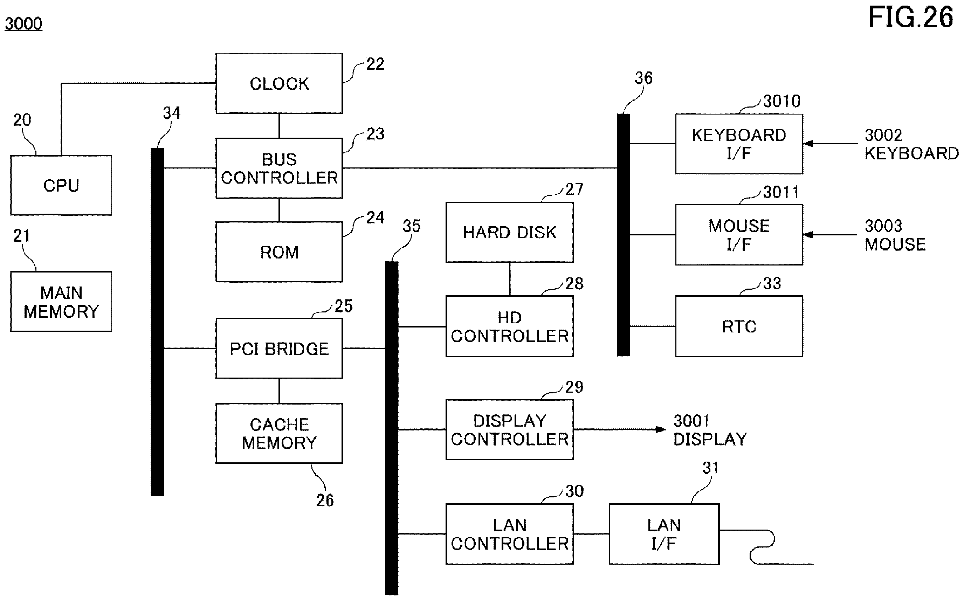

The PC main body 3000 has a hardware configuration, for example, illustrated in Fig. 26. Fig. 26 is a hardware configuration diagram illustrating an example of a PC body in accordance with the present embodiment. Note that the configuration of the PC main body 3000 is the same as that of the controller 12 illustrated in Fig. 3, except for a part thereof. Accordingly, in Fig. 26, the same components as in Fig. 3 are denoted by the same reference numerals as in Fig. 3, and the description thereof will not be repeated. In the PC main body 3000 illustrated in Fig. 26, the touch panel I/F32 of the controller 12 illustrated in Fig. 3 is replaced with the keyboard I/F3010 and the mouse I/F3011.

A keyboard I/F 3010 is connected to a keyboard 3002. The keyboard I/F 3010 is, for example, a USB (Universal Serial Bus). The keyboard I/F 3010 enters a key code from the connected keyboard 3002. A mouse I/F 3011 is connected to the mouse 3003. The mouse I/F 3011 is, for example, a USB. The mouse I/F 3011 receives coordinate data and click information from the connected mouse 3003.

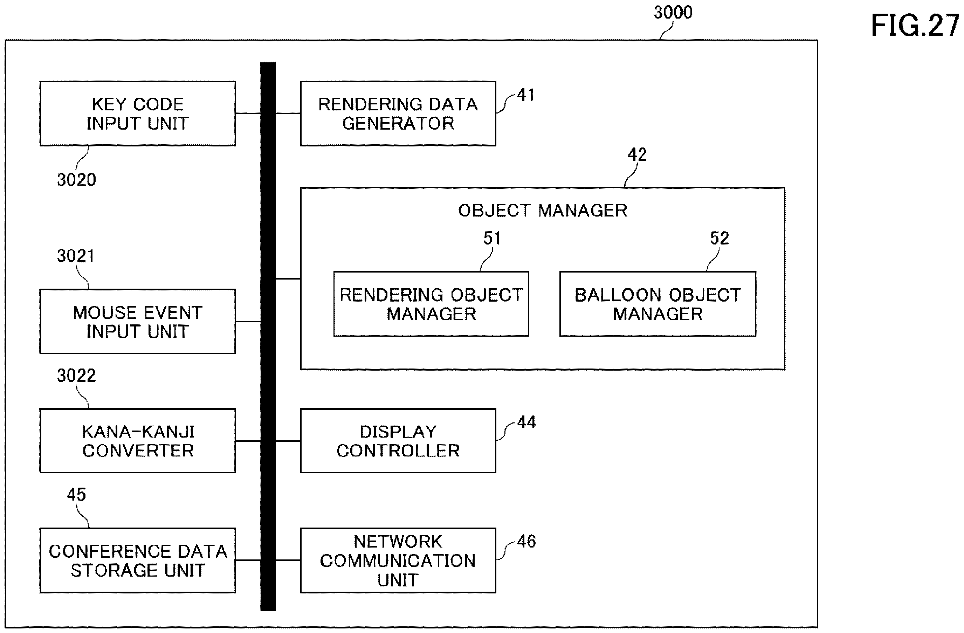

Next, the functions of the PC main body 3000 will be described with reference to Fig. 27. Fig. 27 is a functional block diagram illustrating an example of a PC body in accordance with the present embodiment. The functional configuration of the PC main body 3000 is the same as that of the electronic blackboard 1 illustrated in Fig. 4, except for a part thereof. Accordingly, in Fig. 27, the same components as in Fig. 4 are denoted by the same reference numerals as in Fig. 4, and the description thereof will be appropriately omitted. The PC main body 3000 illustrated in Fig. 27 has a configuration in which a handwriting input unit 40 illustrated in Fig. 4 is replaced with a key code input unit 3020 and a mouse event input unit 3021. The PC main body 3000 illustrated in Fig. 27 has a configuration in which the character recognizer 43 illustrated in Fig. 4 is replaced with a kana-kanji converter 3022.

The key code input unit 3020 is implemented by a command from the CPU 20 illustrated in Fig. 26 and a keyboard 3002 and a keyboard I/F 3010 illustrated in Fig. 26. The mouse event input unit 3021 is implemented by a command from the CPU 20 illustrated in Fig. 26 and a mouse 3003 and a mouse I/F 3011 illustrated in Fig. 26. The kana-kanji converter 3022 is implemented by the CPU 20 illustrated in Fig. 26 that performs processing according to a program using the main memory 21 as a work area.

The key code input unit 3020 receives a key code typed on the keyboard 3002 by a user. The key code input unit 3020 converts the input key code into a corresponding character code. The mouse event input unit 3021 receives coordinate data of the mouse pointer, and click information acquired upon a user clicking the mouse 3003. The kana-kanji converter 3022 converts the character code converted by the key code input unit 3020 into a Kana or Kanji character, for example, by referring to the character code and a Kana-Kanji corresponding table.

The rendering data generator 41 can generate a handwriting object, such as a rendering line, from the coordinate data array input to the mouse event input unit 3021. The rendering data generator 41 generates a rendering object such as a circle, a rectangle, a balloon, and an arrow from the coordinate data or the coordinate data array input to the mouse event input unit 3021.

The object manager 42 includes a rendering object manager 51 and a balloon object manager 52. The rendering object manager 51 manages a rendering object by assigning a rendering object ID to an area such as a rendering line, a circle, a rectangle, a balloon, and an arrow generated by the rendering data generator 41. The rendering object manager 51 also manages position information representing the display position (pixel position of the display 3001) of each rendering object.

The balloon object manager 52 manages a character or a character string (character data) described in the area (display area) of the balloon object with respect to which the rendering object ID and the display position are managed by the rendering object manager 51. Further, the balloon object manager 52 expands or deforms the area of the balloon object as described below, or performs a process for changing (adjusting) the font size of a character or a character string described in the area of the balloon object.

A seventh embodiment is an example in which a balloon object 2004 (an example of a first rendering object) is added to the right side of a rendering object 2006 (see FIG. 7B) of which the object type is "grouped character string" as in the first embodiment, and a rendering object (an example of a second rendering object) having a stamp (mark) shape on the right side and the bottom side of the balloon object 2004.

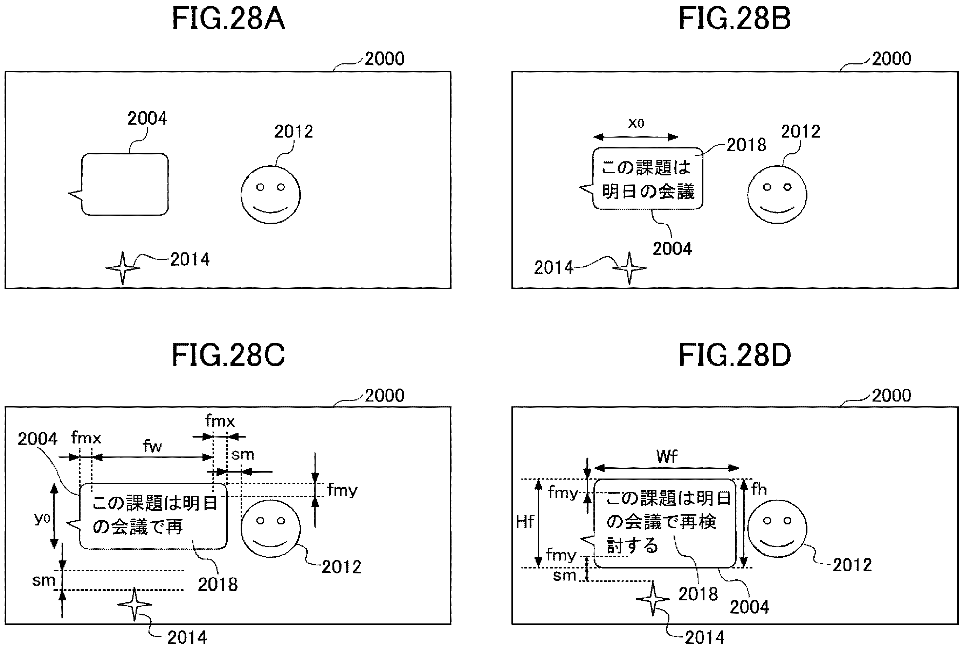

Figs. 28A to 28D are diagrams illustrating examples of a character or a character string input to a balloon object using keyboard input. Fig. 28A is a screen 2000 in which the balloon object 2004 is displayed on the right side of the rendering object 2006 illustrated in Fig. 7B. A user enters a "この課題は明日の会議" from the keyboard 3002, as illustrated in Fig. 28B, with respect to the balloon object 2004 of Fig. 28A. In Fig. 28B, text data 2018 of the input character string is displayed in the balloon object 2004.

The screen 2000 in Fig. 28B is an example in which the text string

"この課題は明日の会議で再検討する" meaning "This issue will be reviewed at tomorrow's meeting" in Japanese which the user is trying to enter as text data 2018 does not fit into the balloon object 2004 of a predetermined size.

In the screen 2000 illustrated in Fig. 28C, the size of the balloon object 2004 area is changed (expanded) so that the entire text data 2018 falls within the display area of the balloon object 2004. Fig. 28C illustrates a screen 2000 in which the balloon object 2004 area is expanded to the right.

However, in the example of Fig. 28C, there is a rendering object 2012 having a stamp shape on the right side of the balloon object 2004. Thus, when the balloon object 2004 area is expanded too far toward the rightward direction, the balloon object 2004 and the rendering object 2012 having a stamp shape overlap each other.

Thus, the balloon object manager 52 calculates the distance between the balloon object 2004 and the rendering object 2012 having the stamp shape, and expands the balloon object 2004 area in the rightward direction as long as the balloon object 2004 does not overlap the stamp shape of the rendering object 2012. The user enters "で再" from the keyboard 3002 following "この課題は明日の会議".

In addition, the user enters „検討する" from the keyboard 3002 following „この課題は明日の会議で再". In the screen 2000 in Fig. 28C, it is assumed that the entered "検討する" does not fit in the balloon object 2004. Then, the balloon object manager 52 expands the balloon object 2004 area downward as illustrated in Fig. 28D so that the entire text data 2018 fits in the display area of the balloon object 2004.

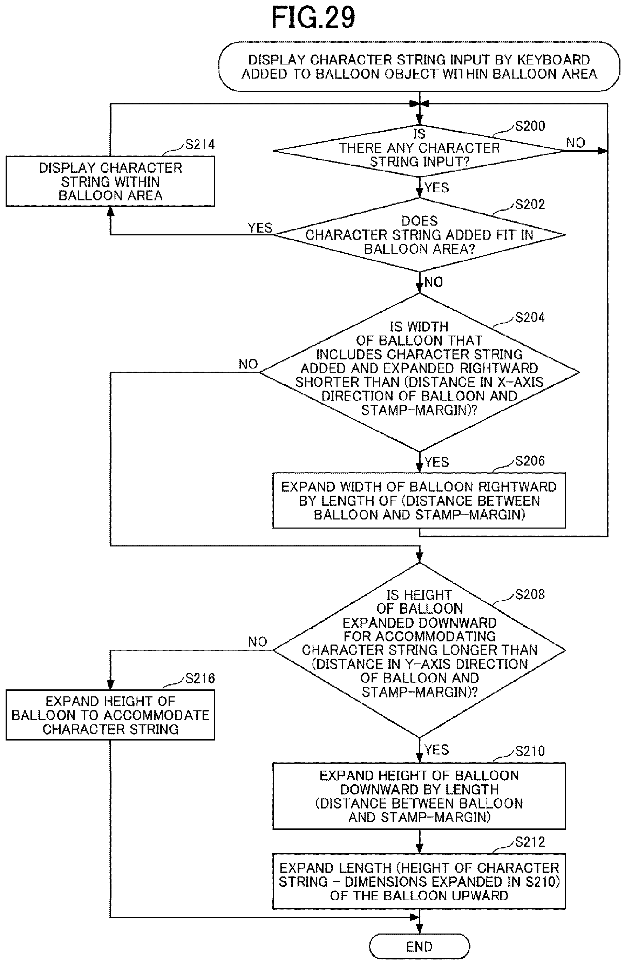

The process of Figs. 28A to 28D is performed as illustrated, for example, in the flowchart of Fig. 29. Fig. 29 is a flowchart illustrating a process of displaying a character string entered by a keyboard in a balloon object.

The user may, for example, manipulate the mouse 3003 to select the balloon object 2004 from the graphic list menu. When the user selects a balloon object, the rendering data generator 41 generates the balloon object 2004 and displays the generated balloon object 2004 at the cursor position with a predetermined size. The balloon object 2004 displayed in the screen 2000 is moved to the cursor position by a user using the mouse 3003. When the user clicks the mouse 3003, the rendering object manager 51 determines the position of the balloon object 2004.

The balloon object 2004 at the determined position displays a cursor for the user to enter a character string into the balloon. The balloon object manager 52 inquires of the rendering object manager 51 and acquires a position (fxs, fys) (the start-point coordinates) of the balloon object 2004, a position (slxs,slys) (the start-point coordinates) of the rendering object 2012 having the stamp shape (the face-mark) located on the right of the balloon object 2004, and a position (s2xs,s2ys) (the start-point coordinates) of the rendering object 2014 having the stamp shape (the star-mark) located beneath the balloon object 2004.

The user enters a character string from the keyboard 3002. When a character string is input by a user (YES in step S200), the kana-kanji converter 3022 performs a kana-kanji conversion process of the input character string. The balloon object manager 52 performs the processes from step S202 onwards so that the entire character string after the kana-kanji conversion process enters the display area of the balloon object 2004.

When the added character string fits in the display area of the balloon object 2004 (YES in step S202), the balloon object manager 52 performs the process of step S214. In step S214, the balloon object manager 52 manages and displays the added character string (Kana, Kanji, alphanumeric number, symbol, etc.) in the display area of the balloon object 2004.

When the added character string does not fit in the display area of the balloon object 2004 (NO in step S202), the balloon object manager 52 performs processes in step S204 onward. In steps S204 to S206, the balloon object manager 52 expands the balloon object 2004 to the rightward expansion limit every time a character or a character string is added.

The balloon object manager 52 determines the width Ws of the character string area every time a character or a character string is added. The balloon object manager 52 determines the value fw by subtracting two margins fmx and sm from the distance (slxs-fxs) in the X-axis direction from the start-point coordinates of the balloon object 2004 and the start-point coordinates of the rendering object 2012. The value fw is the rightward expansion limit of the balloon object 2004 calculated by taking into account the position of the rendering object 2012.

The balloon object manager 52 compares the acquired width Ws and the value fw to determine whether or not the width Ws is shorter than the value fw. When the width Ws is shorter than the value fw, the balloon object manager 52 performs the process in step S206. The balloon object manager 52 laterally expands the width Wf of the balloon object 2004 to meet (the value fw + margin fmx × 2) to stop the lateral expansion at this length.

When the width Ws of the character string area becomes larger than the length fw of one line, a line break code is inserted after the last character input in the length fw of one line, and a subsequent character or character string is displayed from the beginning of a second line. The predefined height of the balloon object 2004 illustrated in Fig. 28C is the length that accommodates two character strings. Accordingly, the balloon object manager 52 does not change the height of the balloon object 2004 up to the reach of the two character strings.

Then, when the character string is added to result in the character strings in three lines, the third line of the character string will protrude outside the balloon area. Accordingly, the balloon object manager 52 performs the processes of steps S208 to S212 and S216 so that the third line of character string enters the balloon area.

In step S208, the balloon object manager 52 checks whether the balloon object 2004 can be expanded downward. That is, when the balloon object manager 52 expands the balloon object 2004 downward, the balloon object manager 52 determines whether or not the stamp (star-mark) located beneath the balloon object 2004 overlaps with the balloon object 2004.

The balloon object manager 52 determines the required height Hf of the balloon object 2004 from the font size, number of rows (three rows), and two margins fmy in the Y-axis direction. The balloon object manager 52 determines the distance Dy between respective start-point coordinates in the Y-axis direction from the position (fxs, fys) (start-point coordinates) of the balloon object 2004 and the position (s2xs, s2ys) (start-point coordinates) of the rendering object 2014 having the stamp shape (star-mark) located beneath the balloon object 2004. In step S216, when the required height Hf of the balloon object 2004 is smaller than the value determined by subtracting the margin sm from the distance Dy (NO in step S208), the balloon object manager 52 expands the balloon object 2004 downward by the length of the height Hf-y0.

In step S212, when the required height Hf of the balloon object 2004 is larger than the value determined by subtracting the margin sm from the distance Dy (YES in step S208), the balloon object manager 52 expands the balloon object 2004 by the length (distance Dy - margin sm - height y0) in the downward direction (distance Dy - margin sm - height y0) (step S210) and expands the length by the length (height Hf - (distance Dy - margin sm)) in the upward direction. Then, as illustrated in Fig. 28D, the balloon object manager 52 displays three line character strings in a display area of the balloon object 2004.

According to the seventh embodiment, when inputting a character or a character string into the balloon object 2004 using the keyboard 3002, the size of the display area of the balloon object 2004 can be changed according to the inputted character or character string. Further, according to the seventh embodiment, the process of expanding the size of the display area of the balloon object 2004 can be performed so as not to overlap with the other rendering objects 2012 and 2014.

Thus, according to the seventh embodiment, the operability of the process of expanding the balloon object 2004 in which a character or a character string is input by keyboard input to a range in which the balloon object 2004 does not overlap other rendering objects 2012 and 2014 displaying the balloon object 2004 with keyboard input character or character string can be improved.

[Eighth Embodiment]

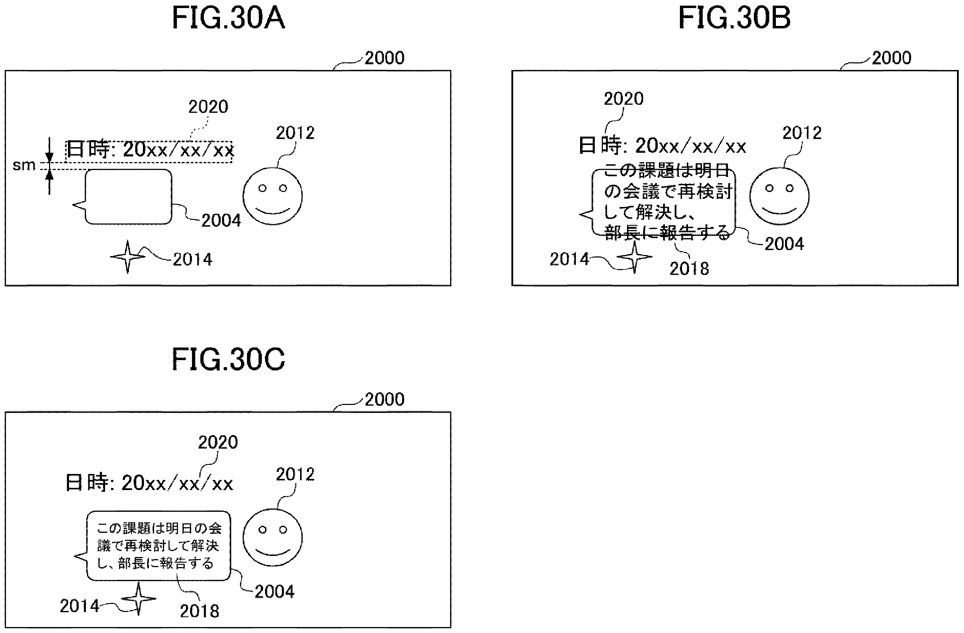

Fig. 30 is a diagram illustrating examples of a character or a character string input to a balloon object using keyboard input. In the seventh embodiment, when an attempt is made to expand the balloon object 2004 downward, there is a rendering object 2014 with a stamp shape (star-mark) downwardly, so that the rendering object 2014 cannot be further expanded downwardly. Therefore, it has been illustrated that the balloon object 2004 is also expanded upwardly. An eighth embodiment causes the font size of the text data to be reduced so that when the balloon object 2004 is no longer scalable, it will be placed within the display area of the balloon object 2004.

The steps S206, S210, and S212 of Fig. 29 of the seventh embodiment illustrate cases in which the character string "この課題は明日の会議で再検討する" meaning "This issue will be reviewed at tomorrow's meeting" in Japanese is all accommodated in the display area of the balloon object 2004 by expanding the balloon object 2004.

In Figs. 30A to 30C of the eighth embodiment, there is a rendering object 2020 "日時 : 20xx/xx/xx" meaning "Sate and Time: 20xx/xx/xx" in Japanese of the character string above the balloon object 200.4, such that the upward expansion range of the balloon object 2004 is limited.

In the example of Fig. 30B, the text data 2018 "この課題は明日の会議で再検討し、部長に報告する" meaning "This issue will be reviewed at tomorrow's meeting and reported to the director" in Japanese entered by the user is outside (exceeds from) the display area of the balloon object 2004, even though the balloon object 2004 is expanded in a range in which the balloon object 2004 does not overlap the other rendering objects 2012, 2014, and 2020.

Accordingly, in the example of Fig. 30C, the font size of the text data 2018 is reduced so that the entire text data 2018 enters the display area of the balloon object 2004.

The process of Figs. 30A to 30C is the same except for part of the process illustrated in Fig. 29 of the seventh embodiment. In the process of Figs. 30A to 30C, the text data 2018 of the character string input by the user cannot be accommodated within the display area of the display object 2004 due to the processes up to step S210 of Fig. 29.

In step S212, the balloon object manager 52 acquires a position (the start-point coordinates and the end-point coordinates) of the rendering object 2020 above the balloon object 2004 from the rendering object manager 51. The balloon object manager 52 determines a distance in the Y-axis direction (fy-tlye) from the end-point coordinates of the acquired rendering object 2020 and the start-point coordinates of the balloon object 2004, and checks whether or not the distance is greater than the margin sm. Since the distance (fy-tlye) in the Y-axis direction of the rendering object 2020 and the balloon object 2004 is smaller than the margin sm, the balloon object manager 52 determines that the balloon object cannot expand the balloon object 2004 in the upward direction.

Accordingly, the balloon object manager 52 changes the font size of the text data 2018 of the character string

"この課題は明日の会議で再検討して解決し、部 長に報告する" to the size that can be displayed in the balloon object 2004.

According to the eighth embodiment, when inputting a character or a character string into the balloon object 2004 using the keyboard 3002, the size of the display area of the balloon object 2004 can be expanded to the size that does not overlap with other rendering objects 2012, 2014, and 2020, and the font size of the characters can be reduced such that the character or character string fits within the display area of the balloon object 2004.

Thus, according to the eighth embodiment, it is possible to improve the operability of the process of displaying the balloon object 2004 in which a character or a character string is input by keyboard input by expanding the balloon object 2004 to an extent that does not overlap with other rendering objects 2012 and 2014.

[Ninth Embodiment]

In the seventh and eighth embodiments, the balloon object 2004 is expanded so as not to overlap with other rendering objects such as rendering objects 2012, 2014, and 2020, thereby displaying the keyboard input character string in the display area of the balloon object 2004. In a ninth embodiment, other rendering objects around the balloon object 2004 move in accordance with the expansion of the balloon object 2004 to avoid the balloon object 2004.

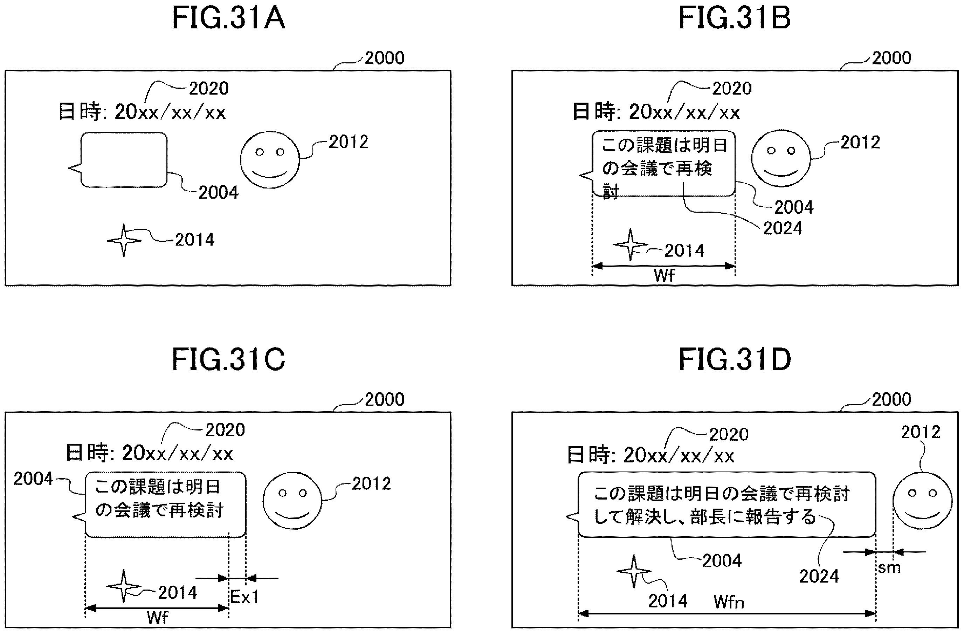

Figs. 31A to 31D are diagrams illustrating examples of input of a character or a character string to a balloon object using keyboard input. In Fig. 31A, there is a rendering object 2020 above the balloon object 2004, such that an upward expansion range (area) of the balloon object 2004 is limited.

The user enters the character string "この課 題は明日の会議で再検討" with a keyboard into the balloon object 2004 of Fig. 31A, as in Fig. 31B. The balloon object manager 52 expands the size of the balloon object 2004 area such that the text data 2024 of the character string input by the keyboard input fits in the display area of the balloon object 2004.

However, in the screen 2000 of Fig. 31B, the entire text data 2024 cannot be accommodated within the display area of the balloon object 2004 because the expansion area of the balloon object 2004 is limited by the other rendering objects 2012, 2014, and 2020 around the balloon object 2004.

Thus, in the example of Figs. 31C and 31D, the balloon object 2004 is expanded laterally, and the rendering object 2012 on the right side of the balloon object 2004 is moved laterally to avoid the balloon object 2004. When the rendering object 2012 cannot be moved laterally (when the rendering object 2012 has already moved to the right end of the screen 2000), the balloon object 2004 may be further expanded downward. In this case, the rendering object 2014 beneath the balloon object 2004 moves to avoid the balloon object 2004.

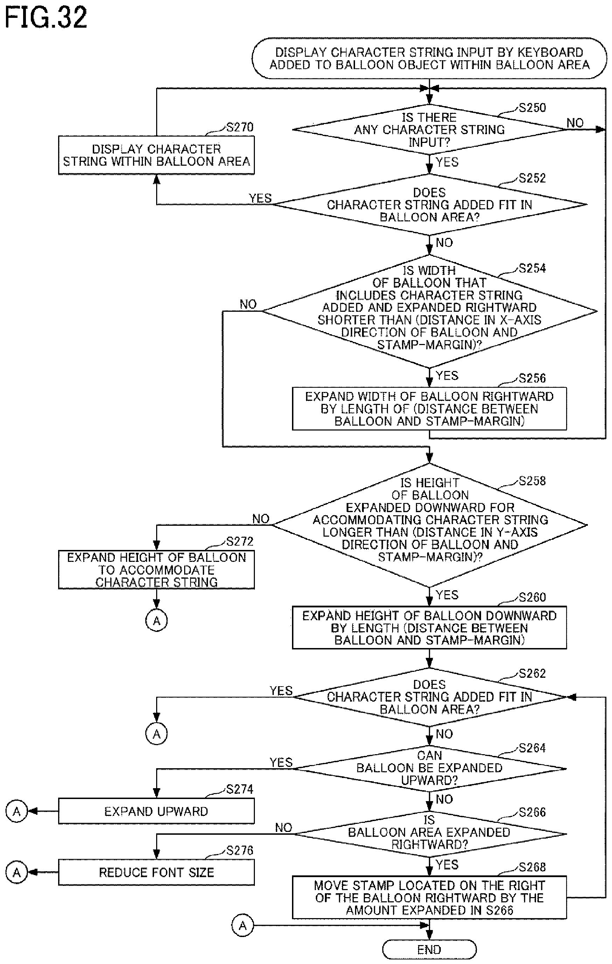

The process of Fig. 31 is performed, for example, as illustrated in the flowchart of Fig. 32. Fig. 32 is a flowchart illustrating a process of displaying a character string entered by a keyboard in a balloon object. Since the flowchart illustrated in Fig. 32 is the same as the flowchart illustrated in Fig. 29 except for a part thereof, the duplicated description will be appropriately omitted. The processes of steps S250 to S260, S270, and S272 are identical to the processes of steps S200 to S210, S214, and S216 of Fig. 29.

Similar to the eighth embodiment, in steps S254 to S256, the balloon object manager 52 expands the balloon object 2004 in a rightward direction when the text data 2024 of the keyboard input character string does not fit within the predetermined display area of the balloon object 2004.

When the balloon object manager 52 expands the balloon object 2004 to the rightward expansion limit, and a character or a character string is input into the expanded balloon object 2004, the balloon object manager 52 performs the processes from step S258 onward. In steps S258 to S262, and S272, when the balloon object manager 52 expands the balloon object 2004 to a downward expansion limit, and a character or a character string is input into the expanded balloon object 2004, the balloon object manager 52 performs processes from step S264 onward.

In step S264 and step S274, when the balloon object manager 52 expands the balloon object 2004 to an upward expansion limit, and then a character or a character string is input into the expanded balloon object 2004, the balloon object manager 52 performs the processes from step S266 onward.

The balloon object manager 52 performs the process in step S268 when the rendering object 2012 on the lateral (right) side of the balloon object 2004 can be moved in the lateral direction to avoid the balloon object 2004. In step S268, when the balloon object manager 52 expands the balloon object 2004 laterally, the rendering object 2012 on the lateral (right) side of the balloon object 2004 laterally moves to avoid the balloon object 2004.

When the rendering object 2012 on the lateral (right) side of the balloon object 2004 cannot be moved laterally to avoid the balloon object 2004, the balloon object manager 52 performs the process in step S276. In step S276, the balloon object manager 52 reduces the font size of the text data 2024 such that the entire text data 2024 is accommodated within the display area of the balloon object 2004.

For example, when the user types "saikentou" with the keyboard 3002, the kana-kanji converter 3022 performs the kana-kanji conversion process. The balloon object manager 52 attempts to display the character string "再検討" after the kana-kanji conversion process. However, under the requirements that the rendering object 2012 on the right side of the balloon object 2004 and the rendering object 2014 beneath the balloon object 2004 do not overlap, the character "討" does not fit in the display area of the balloon object 2004, as illustrated in Fig. 31B.

Accordingly, the balloon object manager 52 expands the display area of the balloon object 2004 by the length of the width Ex1 in the rightward direction so that the character "討" fits within the display area of the balloon object 2004. The balloon object manager 52 requests the rendering object manager 51 to move the rendering object 2012 on the right side of the balloon object 2004 in the rightward direction by the length of the width Ex1.

The rendering object manager 51 replaces the x coordinate value of the start-point coordinates of the rendering object 2012 with a value acquired by adding the value of the width Ex1 to the x coordinate value of the start-point coordinates of the rendering object 2012. The rendering object manager 51 requests the display controller 44 to display the rendering object 2012 from the start-point coordinates after replacement. The display controller 44 moves the rendering object 2012 to the position of the start-point coordinates after replacement and displays the rendering object 2012 on the display 3001 as illustrated in Fig. 31C.

Subsequently, when the user enters a character string using the keyboard 3002, the balloon object manager 52 expands the display area of the balloon object 2004 to the right so that the text data 2024 of the input character string fits in the display area of the balloon object 2004, as illustrated in Fig. 31D. The rendering object manager 51 requests the display controller 44 to move the rendering object 2012 to the right by the length of the expanded balloon object 2004. In this manner, the keyboard entered string "この課題は明日の会議で再検討して解 決し、部長に報告する" appears in the display area of the rightward expanded balloon object 2004.

Thus, according to the ninth embodiment, since the other rendering objects 2012, 2014, and 2020 move to avoid the balloon object 2004 in which a character or a character string is input with a keyboard, the operability of the process of expanding and displaying the balloon object 2004 in a range in which the balloon object 2004 does not overlap the other rendering objects 2012, 2014, and 2020 can be improved.

[Tenth Embodiment]

Note that as in the ninth embodiment, as illustrated in Fig. 16B, it may be possible to set the movement for each rendering object such as the rendering objects 2012 and 2014. For example, when clicking on the rendering object 2012 with the mouse 3003, the movement setting menu 2030 for the rendering object 2012 is displayed. Also, for example, when clicking on a rendering object 2014, a movement setting menu 2032 for the rendering object 2014 is displayed.

The user can set whether to enable or disable the movement of the rendering object 2012 from, for example, the movement setting menu 2030 for the rendering object 2012. The user can also set whether to enable or disable the movement of the rendering object 2014 from, for example, the movement setting menu 2032 for the rendering object 2014. The default setting is, for example, "disabled". As illustrated in Fig. 17, the setting information "enabled/disabled" is managed in association with the rendering object by the rendering object manager 51.

For example, in Fig. 17, a rendering object with a rendering object ID "001" is a character string (not illustrated in Figs. 16A and 16B). A rendering object 2012 with a rendering object ID "002" is a face-mark stamp. A rendering object 2014 with a rendering object ID "003" is a star-mark stamp. A rendering object ID "004" represents the balloon object 2004.

In a tenth embodiment, when the balloon object 2004 is to be expanded, it can be set for each rendering object whether it can be moved to avoid the expansion of the balloon object 2004.

[Eleventh Embodiment]

An eleventh embodiment is an example in which the balloon object 2004 is added to the right side of the rendering object 2006 (see FIG. 7B) of which the object type is "grouped character string" as in the seventh embodiment, and the rendering object 2012 and the balloon object 2040 supplementing the rendering object 2012 are further added on the right side of the balloon object 2004.

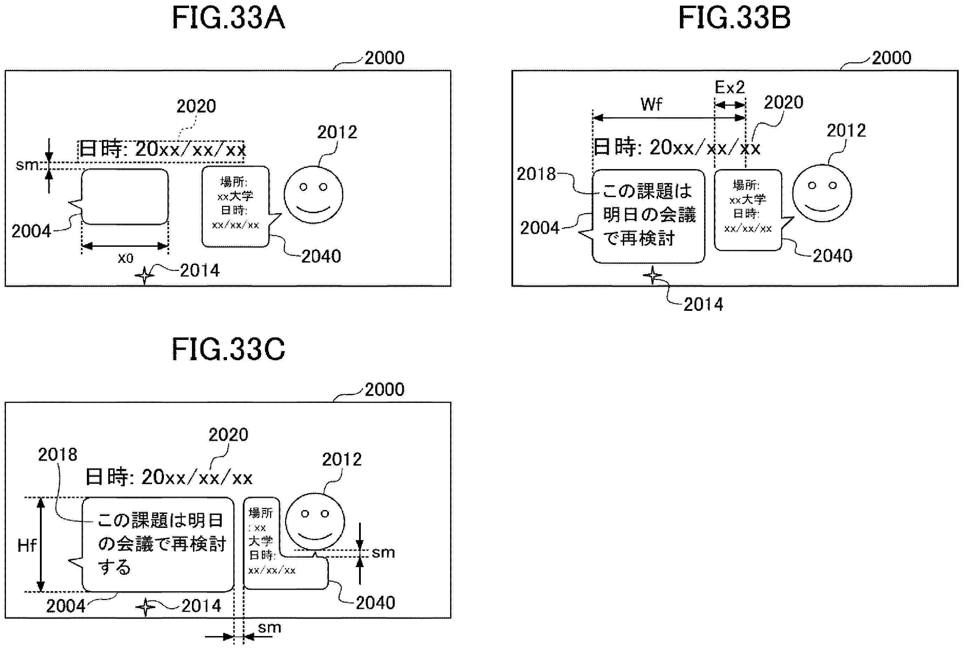

Figs. 33A to 33C are diagrams illustrating examples of input of a character or a character string to a balloon object using keyboard input. Fig. 33A is a screen 2000 displaying the balloon object 2004 on the right side of the rendering object 2006 (see FIG. 7B). The user inputs partial characters "この課題は明日の会議で再検討" of a character string with a keyboard into the balloon object 2004 of Fig. 33A".

The text data 2018 of the keyboard input character string is added to the display area of the balloon object 2004, but the text data 2018 does not fit into the size of the display area of the default balloon object 2004. Accordingly, as illustrated in Fig. 33B, the balloon object manager 52 expands the balloon object 2004 in a rightward direction so as not to overlap with the balloon object 2040 in the rightward direction of the balloon object 2004.

Further, the balloon object manager 52 expands the balloon object 2004 downward so as not to overlap with the rendering object 2014 beneath the balloon object 2004.

The user enters "する" with keyboard input with respect to the balloon object 2004 of Fig. 33B. The balloon object manager 52 expands the balloon object 2004 to the right so that the keyboard input character string fits in the display area of the balloon object 2004. When the rendering object manager 51 detects that the balloon object 2004 overlaps the balloon object 2040, the rendering object manager 51 notifies the object manager 52 of the information about the overlap area. The balloon object manager 52 determines the shape of the balloon object 2040 so as to eliminate the overlap area. The balloon object manager 52 modifies the rendering data of the balloon object 2040 to be in the shape of, for example, the balloon object 2040 illustrated in Fig. 33C.

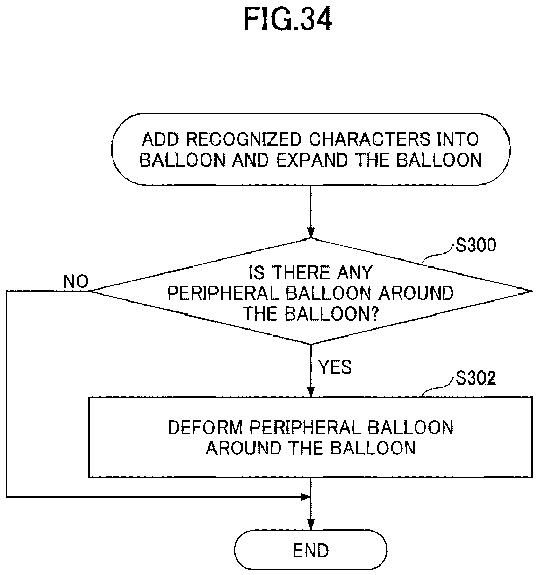

The process of Figs. 33A to 33C is performed using, for example, the flowchart illustrated in Fig. 34. Fig. 34 is a flowchart illustrating a process for displaying a character string entered by a keyboard in a balloon object. The start-point coordinates of the balloon object 2004 are (f1xs, f1ys). The start-point coordinates of the balloon object 2040 are (f2xs, f2ys).

When the user starts the input of the character string by the keyboard 3002 with respect to the balloon object 2004, the balloon object manager 52 checks whether the text data 2018 of the input character string fits in the display area of the balloon object 2004 of a predetermined size. When the number of characters of the text data 2018 increases and the text data 2018 cannot be accommodated in the rendering area, the balloon object manager 52 acquires the position information of all the rendering objects from the rendering object manager 51.

The balloon object manager 52 confirms that the balloon object 2040 is present on the right side of the balloon object 2004, the rendering object 2020 is present in the upper direction of the balloon object 2004, and the rendering object 2014 having the stamp shape (star-mark) is present on the lower side of the balloon object 2004.

The display area of the predetermined size of the balloon object 2004 can accommodate the text data 2018 of the "この課題は明日の会議" but cannot accommodate the text data 2018 of the next "で".

The balloon object manager 52 checks whether the balloon object 2004 can be expanded when the text data 2018 of the "で" is input with a keyboard. The end-point coordinates of the balloon object 2004 can be expanded in the X-axis direction (rightward direction) to a value acquired by subtracting the margin sm from the X-coordinate value f2xs of the start-point coordinates of the balloon object 2040.

In the example of Figs. 33A to 33C, the balloon object manager 52 determines that even when the balloon object 2004 is expanded to the right expansion limit, the text data 2018 of the "で" does not fit into the display area of the balloon object 2004.

Next, when the balloon object manager 52 expands the balloon object 2004 downward so as to accommodate the text data 2018 of the "で" the balloon object manager 52 confirms that the Y-coordinate value of the end-point coordinates of the balloon object 2004 is smaller than the value acquired by subtracting the margin sm from the Y-coordinate value of the start-point coordinates of the rendering object 2014 located beneath the balloon object 2004, and expands the balloon object 2004 downward so as to accommodate the text data 2018 of "で".

The user then enters "再検討する" with a keyboard. The display area of the balloon object 2004 illustrated in Fig. 33B accommodates the text data 2018 of the "再検討" but does not accommodate the next text data 2018 of the "する". When "する" is input with a keyboard, the balloon object manager 52 checks whether the balloon object 2004 can be expanded downward.

Since the Y coordinate value of the end-point coordinates of the balloon object 2004 is larger than the value acquired by subtracting the margin sm from the Y coordinate value of the start-point coordinates of the rendering object 2014 located beneath the balloon object 2004, the balloon object manager 52 determines that the balloon object 2004 cannot be expanded downward.

In step S300, the balloon object manager 52 checks whether or not there are other balloon objects around the balloon object 2004 that is determined to be non-expandable. In the example of Figs. 33A to 33C, the balloon object manager 52 determines that there is another balloon object 2040 on the right side of the balloon object 2004 and performs the process of step S302.

The balloon object manager 52 expands the balloon object 2004 by the length of the width Ex2 in the rightward direction so as to accommodate the text data 2018 of the character string "する". The balloon object manager 52 reduces the width of the balloon object 2040 in the rightward direction of the balloon object 2004 by the length of Ex2. That is, the balloon object manager 52 changes the start-point coordinates of the balloon object 2040 from (f2xs, f2ys) to (f2xs + Ex2, f2ys).

Reducing the width of the balloon object 2040 causes text data contained in the display area of the balloon object 2040 to protrude from the display area of the balloon object 2040. Accordingly, the balloon object manager 52 expands the balloon object 2040 downward so that the height of the balloon object 2040 is the same as that of the balloon object 2004, and expands the balloon object 2040 downward and rightward with respect to the rendering object 2012.

That is, the balloon object manager 52 expands the area below the location (f2xe, slye+sm) of the balloon object 2040 to the right as illustrated in Fig. 33C so that the text data 2018 „この課題は明日の会議で再検討する" fits into the balloon object 2004. The "f2xe" is an x component of the end-point coordinates of the balloon object 2040, the "slye" is a y component of the end-point coordinates of the rendering object 2012, and the "sm" is the margin. As illustrated in Fig. 33C, the balloon object 2040 may be expanded downward without expanding in the rightward direction.

Thus, according to the eleventh embodiment, the operability of the process of expanding and displaying the balloon object 2004 can be improved by deforming the other balloon object 2040 to avoid the balloon object 2004 that is expanded by keyboard input of a character or a character string.

[Twelfth Embodiment]

A twelfth embodiment is an example in which the balloon object 2004 is modified and expanded to avoid other rendering objects 2012, 2014, and 2020 in order to take advantage of the margins.

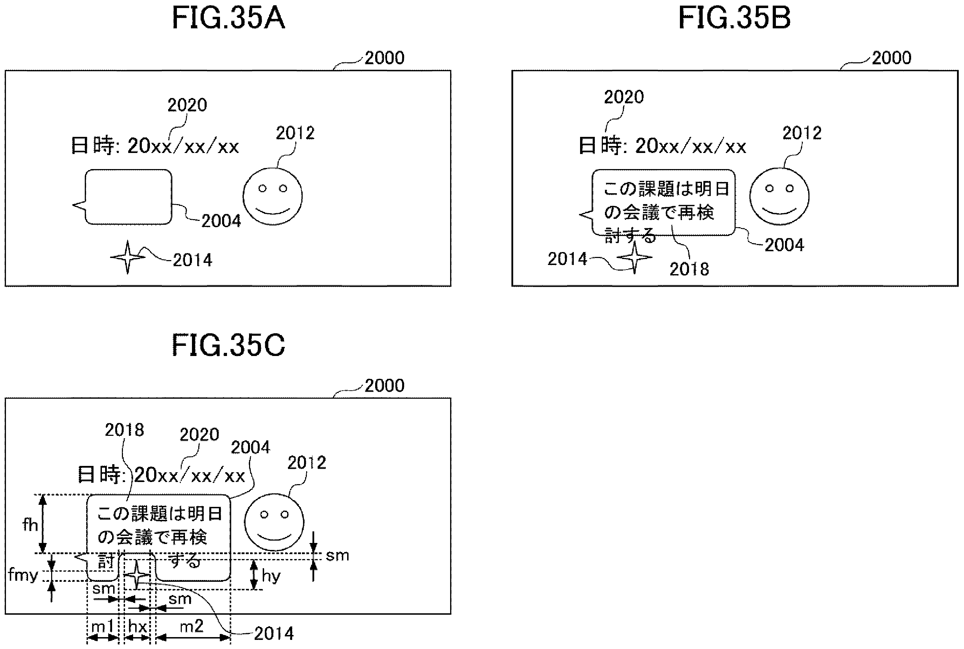

In Fig. 29, steps S206, S210, and S212 illustrate the case in which the text data 2018 of the keyboard input character string is all accommodated within the display area of the balloon object 2004 by expanding the balloon object 2004. In Figs. 35A to 35C, since there is a rendering object 2020 "日時 : 20xx/xx/xx" meaning "Date and Time: 20xx/xx/xx" in Japanese of a character string above the balloon object 2004, an expanding area of the display area of the balloon object 2004 is limited. Thus, the text data 2018 of the keyboard input character string protrudes outside the balloon object 2004, as illustrated in Fig. 35B.

Accordingly, in the example of Fig. 35C, the whole keyboard input text data 2018 „の課題は明日の会議で再検討する" meaning "This issue will be reviewed at tomorrow's meeting" in Japanese is displayed within the display area of the balloon object 2004 by deforming and expanding the balloon object 2004 (in order to avoid other rendering objects 2012, 2014, and 2020) so as not to overlap the other rendering objects 2012, 2014, and 2020.

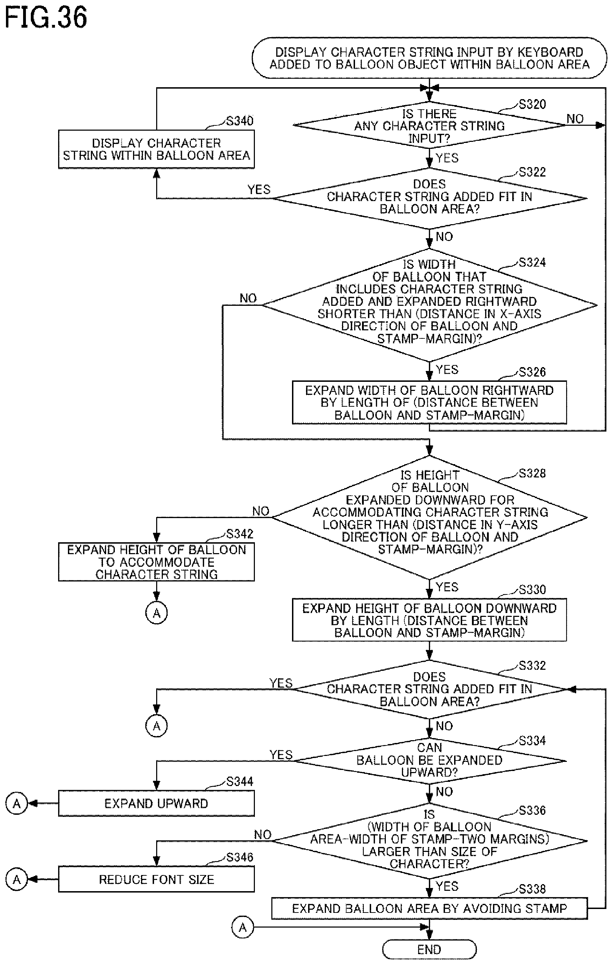

The process of Figs. 35A to 35C is performed using, for example, the flowchart illustrated in Fig. 36. Fig. 36 is a flowchart illustrating a process for displaying a character string entered by a keyboard into a balloon object. Since the flowchart illustrated in Fig. 36 is the same as the flowchart illustrated in Fig. 32 except for a part thereof, the duplicated description is appropriately omitted. The processes of steps S320 to S334, S340, S342, and S344 are identical to the processes of steps S250 to S264, S270, S272, and S274 of Fig. 32.

In the processes up to step S336, the balloon object manager 52 expands the balloon object 2004 to respective expansion limits in the rightward direction, the downward direction, and the upward direction. In step S336, the balloon object manager 52 acquires all the position information of the rendering objects from the rendering object manager 51. The balloon object manager 52 confirms that only the rendering object 2014 exists beneath the balloon object 2004. Then, the balloon object manager 52 confirms that a value acquired by subtracting the width of the rendering object 2014 and the two margins sm from the width of the balloon area is larger than the size of a character.

When YES is selected in step S336, the balloon object manager 52 deforms and expands the balloon object 2004 in a downward direction in step S338 as illustrated, for example, in Fig. 35C so that the balloon object 2004 does not overlap the rendering object 2014. That is, the balloon object manager 52 expands the balloon object 2004 downward by the distance obtained by "the size of characters (height) + the margin fmy in the Y-direction" in the display area of the balloon object 2004, for the range (m1) from the x-coordinate of the start-point coordinates of the balloon object 2004 to the x-coordinate obtained by subtracting the margin sm from the start-point coordinates of the rendering object 2014.

Further, the balloon object manager 52 expands the balloon object 2004 downward by the length of the character size (height) + the distance of the margin fmy in the Y-axis direction in the display area of the balloon object 2004, for the range (m2) from the x coordinate of the value obtained by adding the margin sm to the x-coordinate value of the end-point coordinates of the rendering object 2014 to the x coordinate of the end-point coordinates of the display area of the balloon object 2004.

Then, the balloon object manager 52 accommodates the " 討 " in Japanese character into the expansion area on the left side of the balloon object 2004. Subsequently, when the user enters " する " in Japanese Kana characters, the balloon object manager 52 enters " する " in Japanese characters into the expansion area on the right side of the balloon object 2004.

The balloon object manager 52 requests display to the display controller 44, every time text data 2018 is added to the display area of the balloon object 2004. The display controller 44 displays the updated screen data on the display 3001. In step S346, when the balloon object manager 52 deforms and expands the balloon object 2004 to accommodate the keyboard input character string text data 2018, but the keyboard input character string text data 2018 does not fit within the balloon object 2004, the font size of the text data 2018 is reduced so that the entire text data 2018 is accommodated within the display area of the balloon object 2004.

Thus, according to the twelfth embodiment, the operability of the process of expanding and displaying the balloon object 2004 can be improved by deforming the balloon object 2004 and expanding the size of the display area of the balloon object 2004 so that the balloon object 2004 avoids other rendering objects 2012, 2014, and 2020.

## Claims

**1.**   An input device, comprising:

a handwriting input unit configured to receive a handwriting input;
a rendering generator configured to generate a handwriting object based on the handwriting input received by the handwriting input unit;
an object manager configured to change a shape of a display area of a first rendering object such that the first rendering object and a second rendering object do not overlap with each other, the first rendering object displaying a character or a character string recognized from the handwriting object, and the second rendering object being other than the first rendering object; and
a display controller configured to display the first rendering object having the changed shape of the display area.

**2.**   An input device, comprising:

a key code input unit configured to receive a key code input;
an object manager configured to change a shape of a display area of a first rendering object such that the first rendering object and a second rendering object do not overlap each other, the first rendering object displaying a character or a character string converted from the key code in the display area of the first rendering object, and the second rendering object being other than the first rendering object; and
a display controller configured to display the first rendering object having the changed shape of the display area.

**3.**   The input device according to claim 1 or 2, wherein
the shape of the display area indicates at least one of a shape or a size of the display area.

**4.**   The input device according to claim 1, wherein
the object manager changes the shape of the display area of the first rendering object such that a character or a character string recognized from the handwriting object is displayed within the display area of the first rendering object.

**5.** The input device according to claim 1 or 4, wherein
the object manager changes a font size of a character or a character string recognized from the handwriting object so as to display the character or the character string recognized from the handwriting object within the display area of the first rendering object.

**6.** The input device according to claim 2, wherein
the object manager changes a font size of a character or a character string such that the character or the character string converted from the key code is displayed in the display area of the first rendering object.

**7.** The input device according to any one of claims 1 to 6, wherein
the object manager changes the display position of the second rendering object such that the first rendering object and the second rendering object do not overlap with each other.

**8.** The input device according to claim 7, wherein

the object manager manages enabled/disabled setting information for changing a display position for each of second rendering objects, and
the object manager changes a display position of a second rendering object whose setting information is "enabled".

**9.** The input device according to any one of claims 1 to 6, wherein
the object manager deforms the second rendering object and displays the deformed second rendering object such that the first rendering object and the deformed second rendering object do not overlap each other.

**10.** The input device according to claim 1 or 4, wherein
the object manager selects, as the first rendering object associated with the handwriting object, the first rendering object having the display area within which position information of a beginning of the handwriting object is located, the character or the character string being recognized from the handwriting object.

**11.** The input device according to any one of claims 1 to 10, wherein the first rendering object is a balloon object.

**12.** An input method comprising:

causing a handwriting input unit to receive a handwriting input;
causing a rendering generator to generate a handwriting object based on the handwriting input received by the handwriting input unit;
causing an object manager to change a shape of a display area of a first rendering object such that the first rendering object and a second rendering object do not overlap with each other, the first rendering object displaying a character or a character string recognized from the handwriting object, and the second rendering object being other than the first rendering object; and
causing a display controller configured to display the first rendering object having the changed shape of the display area.

**13.** An input method comprising:

a key code input unit configured to receive a key code input;
an object manager configured to change a shape of a display area of a first rendering object such that the first rendering object and a second rendering object do not overlap each other, the first rendering object displaying a character or a character string converted from the key code in the display area of the first rendering object, and the second rendering object being other than the first rendering object; and
a display controller configured to display the first rendering object having the changed shape of the display area.

**14.** A program for causing an input device function as following units, the following units comprising:

a handwriting input unit configured to receive a handwriting input;
a rendering generator configured to generate a handwriting object based on the handwriting input received by the handwriting input unit;
an object manager configured to change a shape of a display area of a first rendering object such that the first rendering object and a second rendering object do not overlap with each other, the first rendering object displaying a character or a character string recognized from the handwriting object, and the second rendering object being other than the first rendering object; and

a display controller configured to display the first rendering object having the changed shape of the display area.

15. A program for causing an input device to function as following units, the following units comprising:

a key code input unit configured to receive a key code input;

an object manager configured to change a shape of a display area of a first rendering object such that the first rendering object and a second rendering object do not overlap each other, the first rendering object displaying a character or a character string converted from the key code in the display area of the first rendering object, and the second rendering object being other than the first rendering object; and

a display controller configured to display the first rendering object having the changed shape of the display area.

# FIG.1

EP 3 989 051 A1

FIG.2

EP 3 989 051 A1

FIG.3

EP 3 989 051 A1

FIG.4

1

HANDWRITING INPUT UNIT (CONTACT POSITION DETECTOR)

40

RENDERING DATA GENERATOR

41

42

OBJECT MANAGER

51

RENDERING OBJECT MANAGER

52

BALLOON OBJECT MANAGER

43

CHARACTER RECOGNIZER

DISPLAY CONTROLLER

44

45

CONFERENCE DATA STORAGE UNIT

NETWORK COMMUNICATION UNIT

46

# FIG.5

EP 3 989 051 A1

# FIG.6

| RENDERING OBJECT ID | POSITION INFORMATION | | OBJECT TYPE |
| --- | --- | --- | --- |
| | START-POINT COORDINATES | END-POINT COORDINATES | |
| 001 | (o1xs, o1ys) | (o1xe, o1ye) | CHARACTER STRING |
| 002 | (o2xs, o2ys) | (o2xe, o2ye) | GROUPED CHARACTER STRING |
| 003 | (o3xs, o3ys) | (o3xe, o3ye) | BALLOON |
| 004 | (o4xs, o4ys) | (o4xe, o4ye) | ICON |

FIG.7B

2000

報告会の準備

·文書の発行
·機材の確保
·議事録

2004

2006

FIG.7A

2000

報告会の準備

·文書の発行
·機材の確保
·議事録

2002

FIG.7C

FIG.7D

EP 3 989 051 A1

# FIG.8

```
                    ┌─────────────┐
                    │    START    │
                    └─────────────┘
                           │
        ┌──────────────────┤
        │                  ▼
        │         ╱─────────────────╲        S10
        │  NO    ╱  HAS BALLOON OBJECT BEEN  ╲
        │◄──────┤      RENDERED?              │
        │        ╲─────────────────╱
        │                  │ YES
        │                  ▼
        │         ╱─────────────────╲        S12
        │  NO    ╱  IS FIRST STROKE OF        ╲
        │◄──────┤ HANDWRITING INPUT PRESENT WITHIN │
        │        ╲    BALLOON AREA?         ╱
        │         ╲─────────────────╱
        │                  │ YES
        │                  ▼
        │         ╱─────────────────╲        S14
        │  NO    ╱  HAS PREDETERMINED         ╲
        └───────┤ TIME ELAPSED SINCE PEN HAS LEFT │
                 ╲   FROM SCREEN?            ╱
                  ╲─────────────────╱
                           │ YES
                           ▼                 S16
          ┌─────────────────────────────────┐
          │  DISPLAY RECOGNIZED HANDWRITING  │
          │ CHARACTERS ADDED TO BALLOON OBJECT│
          │      WITHIN BALLOON AREA         │
          └─────────────────────────────────┘
                           │
                           ▼
                    ┌─────────────┐
                    │     END     │
                    └─────────────┘
```

FIG.9A

FIG.9B

FIG.9C

FIG.9D

# FIG.10

```
┌─────────────────────────────────────┐
│ S16: DISPLAY RECOGNIZED HANDWRITING  │
│     CHARACTERS ADDED TO BALLOON      │
│      OBJECT WITHIN BALLOON AREA      │
└─────────────────────────────────────┘
                    │
                    ▼
              ╱──── S22
            IS WIDTH OF
        RECOGNIZED CHARACTER
         STRING LONGER THAN
   NO   (WIDTH OF BALLOON + DISTANCE
◄────    BETWEEN BALLOON AND
            STAMP)?
    │               │ YES
    │               ▼
┌─────────────┐ ┌─────────────────────────┐
│ S32         │ │ S24                     │
│ EXPAND      │ │ EXPAND WIDTH OF BALLOON │
│ BALLOON TO  │ │ TO LENGTH OF (DISTANCE  │
│ WIDTH OF    │ │ BETWEEN BALLOON AND     │
│ RECOGNIZED  │ │ STAMP-MARGIN)           │
│ CHARACTER   │ └─────────────────────────┘
│ STRING AREA │           │
└─────────────┘           ▼
    │                ╱──── S26
    │              IS HEIGHT OF
    │          RECOGNIZED CHARACTER
    │           STRING LONGER THAN
    │    NO    (HEIGHT OF BALLOON + DISTANCE
    │  ◄────    BETWEEN BALLOON AND
    │              STAMP)?
    │    │               │ YES
    │    ▼               ▼
    │ ┌─────────────┐ ┌─────────────────────────┐
    │ │ S34         │ │ S28                     │
    │ │ EXPAND      │ │ EXPAND HEIGHT OF BALLOON│
    │ │ BALLOON TO  │ │ DOWNWARD TO LENGTH OF   │
    │ │ HEIGHT OF   │ │ (DISTANCE BETWEEN BALLOON│
    │ │ RECOGNIZED  │ │ AND LOWER OBJECT-MARGIN)│
    │ │ CHARACTER   │ └─────────────────────────┘
    │ │ STRING AREA │           │
    │ └─────────────┘           ▼
    │    │                ┌─────────────────────────┐
    │    │                │ S30                     │
    │    │                │ EXPAND BALLOON UPWARD BY│
    │    │                │ LENGTH (HEIGHT OF       │
    │    │                │ RECOGNIZED CHARACTER    │
    │    │                │ STRING-DIMENSIONS       │
    │    │                │ EXPANDED IN S24)        │
    │    │                └─────────────────────────┘
    │    │                         │
    └────┴─────────────────────────┤
                                   ▼
                               ( END )
```

FIG.11A

FIG.11B

FIG.11C

# FIG.12

S16: DISPLAY RECOGNIZED HANDWRITING
CHARACTERS ADDED TO BALLOON
OBJECT WITHIN BALLOON AREA

S40
IS WIDTH OF
RECOGNIZED CHARACTER
STRING LONGER THAN (WIDTH OF
BALLOON + DISTANCE BETWEEN
BALLOON AND
STAMP)?

NO

S54
EXPAND BALLOON TO
WIDTH OF RECOGNIZED
CHARACTER STRING AREA

YES

S42
EXPAND WIDTH OF BALLOON TO
LENGTH OF (DISTANCE BETWEEN
BALLOON AND STAMP-MARGIN)

S44
IS HEIGHT OF
RECOGNIZED CHARACTER
STRING LONGER THAN (HEIGHT OF
BALLOON + DISTANCE BETWEEN
BALLOON AND
STAMP)?

NO

S56
EXPAND BALLOON TO
HEIGHT OF RECOGNIZED
CHARACTER STRING AREA

YES

S46
EXPAND HEIGHT OF BALLOON
DOWNWARD TO LENGTH OF
(DISTANCE BETWEEN BALLOON
AND LOWER OBJECT-MARGIN)

S48
DOES RECOGNIZED
CHARACTER STRING FIT IN
BALLOON AREA?

YES

NO

S50
CAN RECOGNIZED
CHARACTER STRING BE EXPANDED
UPWARD?

YES

S58
EXPAND RECOGNIZED
CHARACTER
STRING UPWARD

NO

S52
REDUCE FONT SIZE

END

41

# FIG.13A

2000

2020

2012

日時: 20xx/xx/xx

2004

2014

# FIG.13B

2000

2020

2012

日時: 20xx/xx/xx

この課題は明日
の会議で再検
討する

2014    2018    2004

# FIG.13C

2000

2018  2020  2004  2012

日時: 20xx/xx/xx

fh

この課題は明日
の会議で再検

sm

fmy    討    する

hy

sm

sm

m1  hx    m2    2014

EP 3 989 051 A1

# FIG.14

```
┌─────────────────────────────────────────┐
│ S16: DISPLAY RECOGNIZED HANDWRITING      │
│ CHARACTERS ADDED TO BALLOON              │
│ OBJECT WITHIN BALLOON AREA               │
└─────────────────────────────────────────┘
                    │
                    ▼
              ╱─────────────╲  ─── S60
        NO  ╱ IS WIDTH OF     ╲
    ┌──────  RECOGNIZED CHARACTER  ──
    │       ╲ STRING LONGER THAN (WIDTH OF ╱
    │        ╲ BALLOON + DISTANCE BETWEEN ╱
    │         ╲ BALLOON AND ╱
    │          ╲ STAMP)? ╱
    │               │ YES
    │               ▼
    │   ┌──────────────────────────────────┐ ─ S62
S76 │   │ EXPAND WIDTH OF BALLOON TO LENGTH OF │
    │   │ (DISTANCE BETWEEN BALLOON AND STAMP-MARGIN) │
    ▼   └──────────────────────────────────┘
┌─────────────────┐         │
│ EXPAND BALLOON TO WIDTH │         ▼
│ OF RECOGNIZED CHARACTER │   ╱─────────────╲ ─ S64
│ STRING AREA     │  NO ╱ IS HEIGHT OF   ╲
└─────────────────┘ ◄──  RECOGNIZED CHARACTER  ──
                    ╲ STRING LONGER THAN (HEIGHT OF ╱
           S78      ╲ BALLOON + DISTANCE BETWEEN ╱
                     ╲ BALLOON AND ╱
                      ╲ STAMP)? ╱
                           │ YES
```

IS WIDTH OF RECOGNIZED CHARACTER STRING LONGER THAN (WIDTH OF BALLOON + DISTANCE BETWEEN BALLOON AND STAMP)?

S76: EXPAND BALLOON TO WIDTH OF RECOGNIZED CHARACTER STRING AREA

S62: EXPAND WIDTH OF BALLOON TO LENGTH OF (DISTANCE BETWEEN BALLOON AND STAMP-MARGIN)

S64: IS HEIGHT OF RECOGNIZED CHARACTER STRING LONGER THAN (HEIGHT OF BALLOON + DISTANCE BETWEEN BALLOON AND STAMP)?

S78: EXPAND BALLOON TO HEIGHT OF RECOGNIZED CHARACTER STRING AREA

S66: EXPAND HEIGHT OF BALLOON DOWNWARD TO LENGTH OF (DISTANCE BETWEEN BALLOON AND LOWER OBJECT-MARGIN)

S68: DOES RECOGNIZED CHARACTER STRING FIT IN BALLOON AREA?

S70: CAN RECOGNIZED CHARACTER STRING BE EXPANDED UPWARD?

S80: EXPAND RECOGNIZED CHARACTER STRING UPWARD

S72: ARE CHARACTERS THAT DO NOT FIT IN BALLOON AREA ACCOMMODATED WITHIN RANGE OF VALUE OBTAINED BY (WIDTH OF THE BALLOON OBJECT AREA - WIDTH OF STAMP AND TWO MARGINS)?

S82: REDUCE FONT SIZE

S74: EXPAND BALLOON AREA BY AVOIDING STAMP

END

43

FIG.15A

2020
日時: 20xx/xx/xx
2012
2004
2014

FIG.15B

2020
日時: 20xx/xx/xx
2012
この課題は明日の会議で再検討して解決し、部長に報告する
2004
2024
2014
Wf

FIG.15C

2020
日時: 20xx/xx/xx
2012
この課題は明日の会議で再検討して解決し、部長に報告する
2004
2024
2014
Wfn
sm
2000

# FIG.16A

2000

2004

2012

2014

# FIG.16B

2000

2030

MOVEMENT
SETTING
▶ ENABLED
▷ DISABLED

2012

MOVEMENT
SETTING
▷ ENABLED
▶ DISABLED

2032

2014

## FIG.17

| RENDERING OBJECT ID | POSITION INFORMATION | | OBJECT TYPE | MOVEMENT SETTING |
|---|---|---|---|---|
| | START-POINT COORDINATES | END-POINT COORDINATES | | |
| 001 | (t1xs, t1ys) | (t1xe, t1ye) | GROUPED CHARACTER STRING | DISABLED |
| 002 | (s1xs, s1ys) | (s1xe, s1ye) | STAMP | ENABLED |
| 003 | (s2xs, s2ys) | (s2xe, s2ye) | STAMP | DISABLED |
| 004 | (fxs, fys) | (fxe, fye) | BALLOON | DISABLED |

FIG.18

```
S16: DISPLAY RECOGNIZED HANDWRITING
CHARACTERS ADDED TO BALLOON
OBJECT WITHIN BALLOON AREA
```

S100
IS WIDTH OF
RECOGNIZED CHARACTER
STRING LONGER THAN (WIDTH OF
BALLOON + DISTANCE BETWEEN
BALLOON AND
STAMP)?

NO → S116
EXPAND BALLOON TO WIDTH
OF RECOGNIZED CHARACTER
STRING AREA

YES → S102
EXPAND WIDTH OF BALLOON TO LENGTH OF
(DISTANCE BETWEEN BALLOON AND
STAMP-MARGIN)

S104
IS HEIGHT OF
RECOGNIZED CHARACTER
STRING LONGER THAN (HEIGHT OF
BALLOON + DISTANCE BETWEEN
BALLOON AND
STAMP)?

YES → S106
CAN
BALLOON OBJECT EXPAND
UPWARD?

YES → S108
CAN
BALLOON OBJECT EXPAND
DOWNWARD?

NO → S110
CAN RENDERING
OBJECTS AROUND THE
BALLOON OBJECT BE MOVED
LATERALLY?

S118
EXPAND BALLOON TO
HEIGHT OF RECOGNIZED
CHARACTER STRING AREA

YES → S112
EXPAND BALLOON LATERALLY BY THE
AMOUNT THAT THE CHARACTER STRING IS
DISPLAYED

S114
MOVE RENDERING OBJECTS AROUND THE
BALLOON OBJECT

NO → S120
REDUCES THE
FONT SIZE

END

FIG.19A

FIG.19B

FIG.19C

FIG.19D

EP 3 989 051 A1

# FIG.20

S16: DISPLAY RECOGNIZED HANDWRITING CHARACTERS ADDED TO BALLOON OBJECT WITHIN BALLOON AREA

ADD RECOGNIZED CHARACTERS INTO BALLOON AND EXPAND THE BALLOON ⸺S150

IS THERE ANY PERIPHERAL BALLOON? ⸺S152

NO

YES

DEFORM PERIPHERAL BALLOON ⸺S154

END

# FIG.21

TEAM A IN CHARGE

BUDGET REVIEW

YEAR-ON-YEAR INCREASE!

SAVE IN RE-EDITABLE FORMAT

SERVER

SAVE IN RE-EDITABLE FORMAT

USB MEMORY

SAVE 431

EP 3 989 051 A1

# FIG.22

FIG.23

800A

810A

820A

USB CHARGING

600

# FIG.24

# FIG.25

2

3001

DISPLAY

3000

PC BODY

3003

3002

FIG.26

EP 3 989 051 A1

FIG.27

EP 3 989 051 A1

FIG.28A

FIG.28B

FIG.28C

FIG.28D

# FIG.29

```
┌─────────────────────────────────────────────┐
│  DISPLAY CHARACTER STRING INPUT BY KEYBOARD   │
│  ADDED TO BALLOON OBJECT WITHIN BALLOON AREA  │
└─────────────────────────────────────────────┘
```

S214 — DISPLAY CHARACTER STRING WITHIN BALLOON AREA

S200 — IS THERE ANY CHARACTER STRING INPUT? — NO

YES

S202 — DOES CHARACTER STRING ADDED FIT IN BALLOON AREA? — YES

NO

S204 — IS WIDTH OF BALLOON THAT INCLUDES CHARACTER STRING ADDED AND EXPANDED RIGHTWARD SHORTER THAN (DISTANCE IN X-AXIS DIRECTION OF BALLOON AND STAMP-MARGIN)? — NO

YES

S206 — EXPAND WIDTH OF BALLOON RIGHTWARD BY LENGTH OF (DISTANCE BETWEEN BALLOON AND STAMP-MARGIN)

S208 — IS HEIGHT OF BALLOON EXPANDED DOWNWARD FOR ACCOMMODATING CHARACTER STRING LONGER THAN (DISTANCE IN Y-AXIS DIRECTION OF BALLOON AND STAMP-MARGIN)? — NO

S216 — EXPAND HEIGHT OF BALLOON TO ACCOMMODATE CHARACTER STRING

YES

S210 — EXPAND HEIGHT OF BALLOON DOWNWARD BY LENGTH (DISTANCE BETWEEN BALLOON AND STAMP-MARGIN)

S212 — EXPAND LENGTH (HEIGHT OF CHARACTER STRING – DIMENSIONS EXPANDED IN S210) OF THE BALLOON UPWARD

END

EP 3 989 051 A1

FIG.30A

FIG.30B

FIG.30C

FIG.31A

FIG.31B

FIG.31C

FIG.31D

# FIG.32

DISPLAY CHARACTER STRING INPUT BY KEYBOARD
ADDED TO BALLOON OBJECT WITHIN BALLOON AREA

S250 — IS THERE ANY CHARACTER STRING INPUT? — NO

YES

S252 — DOES CHARACTER STRING ADDED FIT IN BALLOON AREA? — YES → S270 DISPLAY CHARACTER STRING WITHIN BALLOON AREA

NO

S254 — IS WIDTH OF BALLOON THAT INCLUDES CHARACTER STRING ADDED AND EXPANDED RIGHTWARD SHORTER THAN (DISTANCE IN X-AXIS DIRECTION OF BALLOON AND STAMP-MARGIN)? — NO

YES

S256 — EXPAND WIDTH OF BALLOON RIGHTWARD BY LENGTH OF (DISTANCE BETWEEN BALLOON AND STAMP-MARGIN)

S258 — IS HEIGHT OF BALLOON EXPANDED DOWNWARD FOR ACCOMMODATING CHARACTER STRING LONGER THAN (DISTANCE IN Y-AXIS DIRECTION OF BALLOON AND STAMP-MARGIN)? — NO → S272 EXPAND HEIGHT OF BALLOON TO ACCOMMODATE CHARACTER STRING → (A)

YES

S260 — EXPAND HEIGHT OF BALLOON DOWNWARD BY LENGTH (DISTANCE BETWEEN BALLOON AND STAMP-MARGIN)

S262 — DOES CHARACTER STRING ADDED FIT IN BALLOON AREA? — YES → (A)

NO

S264 — CAN BALLOON BE EXPANDED UPWARD? — YES → S274 EXPAND UPWARD → (A)

NO

S266 — IS BALLOON AREA EXPANDED RIGHTWARD? — NO → S276 REDUCE FONT SIZE → (A)

YES

S268 — MOVE STAMP LOCATED ON THE RIGHT OF THE BALLOON RIGHTWARD BY THE AMOUNT EXPANDED IN S266

(A) → END

FIG.33A

FIG.33B

FIG.33C

# FIG.34

```
┌─────────────────────────────────────────┐
│   ADD RECOGNIZED CHARACTERS INTO         │
│   BALLOON AND EXPAND THE BALLOON         │
└─────────────────────────────────────────┘
                      │
                      ▼
                                        S300
         IS THERE ANY
  NO   PERIPHERAL BALLOON AROUND
         THE BALLOON?
                      │
                     YES
                                        S302
┌─────────────────────────────────────────┐
│      DEFORM PERIPHERAL BALLOON           │
│        AROUND THE BALLOON                │
└─────────────────────────────────────────┘
                      │
                      ▼
                   ( END )
```

FIG.35A

FIG.35B

FIG.35C

# FIG.36

DISPLAY CHARACTER STRING INPUT BY KEYBOARD
ADDED TO BALLOON OBJECT WITHIN BALLOON AREA

S320
IS THERE
ANY CHARACTER STRING
INPUT? — NO

YES

S322
DOES
CHARACTER STRING ADDED FIT IN
BALLOON AREA?

YES → S340
DISPLAY CHARACTER
STRING WITHIN BALLOON AREA

NO

S324
IS WIDTH
OF BALLOON THAT
INCLUDES CHARACTER STRING
ADDED AND EXPANDED RIGHTWARD
SHORTER THAN (DISTANCE IN X-AXIS
DIRECTION OF BALLOON AND
STAMP-MARGIN)?

NO

YES

S326
EXPAND WIDTH OF BALLOON RIGHTWARD
BY LENGTH OF (DISTANCE BETWEEN
BALLOON AND STAMP-MARGIN)

S328
IS HEIGHT
OF BALLOON
EXPANDED DOWNWARD FOR
ACCOMMODATING CHARACTER STRING
LONGER THAN (DISTANCE IN Y-AXIS
DIRECTION OF BALLOON AND
STAMP-MARGIN)?

NO → S342
EXPAND HEIGHT OF BALLOON
TO ACCOMMODATE
CHARACTER STRING

(A)

YES

S330
EXPAND HEIGHT OF BALLOON DOWNWARD
BY LENGTH (DISTANCE BETWEEN
BALLOON AND STAMP-MARGIN)

S332
DOES
CHARACTER STRING ADDED FIT IN
BALLOON AREA?

YES → (A)

NO

S334
CAN
BALLOON BE EXPANDED
UPWARD?

YES

S344
EXPAND UPWARD → (A)

NO

S336
IS
(WIDTH OF BALLOON
AREA-WIDTH OF STAMP-TWO MARGINS)
LARGER THAN SIZE OF
CHARACTER?

NO

S346
REDUCE FONT SIZE → (A)

YES

S338
EXPAND BALLOON AREA BY AVOIDING STAMP

(A)

END

Europäisches
Patentamt

European
Patent Office

Office européen
des brevets

# EUROPEAN SEARCH REPORT

Application Number

EP 21 19 7712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/085932 A1 (KAWAMOTO KOUSHI [JP] ET AL) 2 April 2009 (2009-04-02) | 1,3,4, 7-12,14 | INV. G06F3/04883 |
| Y | * paragraph [0051] - paragraph [0058] * <br> * paragraph [0024] * <br> * figures 7A-8C * | 2,5,6, 13,15 | G06F3/04886 |
| Y | US 2019/272089 A1 (ICHIKAWA KEI [JP] ET AL) 5 September 2019 (2019-09-05) <br> * paragraph [0029] - paragraph [0031]; figures 1,2 * | 2,13,15 | |
| Y | WO 2018/077474 A1 (MYSCRIPT [FR]) 3 May 2018 (2018-05-03) <br> * paragraph [0138] - paragraph [0143]; figures 8-9B * | 5,6 | |
| A | JP 2015 036806 A (MAKE SOFTWARE KK) 23 February 2015 (2015-02-23) <br> * paragraph [0367] - paragraph [0381]; figures 48,49 * | 1-15 | |

**TECHNICAL FIELDS
SEARCHED (IPC)**

G06F

The present search report has been drawn up for all claims

| Place of search | Date of completion of the search | Examiner |
|---|---|---|
| Berlin | 3 March 2022 | Kirsten, Karl |

EPO FORM 1503 03.82 (P04C01)

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

## ANNEX TO THE EUROPEAN SEARCH REPORT
## ON EUROPEAN PATENT APPLICATION NO.

EP 21 19 7712

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2022

| Patent document cited in search report | Publication date | Patent family member(s) | Publication date |
|---|---|---|---|
| US 2009085932 A1 | 02-04-2009 | CN 101398938 A<br>JP 5023937 B2<br>JP 2009086860 A<br>US 2009085932 A1 | 01-04-2009<br>12-09-2012<br>23-04-2009<br>02-04-2009 |
| US 2019272089 A1 | 05-09-2019 | CN 110231875 A<br>EP 3537341 A1<br>JP 2019153132 A<br>US 2019272089 A1 | 13-09-2019<br>11-09-2019<br>12-09-2019<br>05-09-2019 |
| WO 2018077474 A1 | 03-05-2018 | CN 110073350 A<br>EP 3532942 A1<br>KR 20190076008 A<br>US 2018114059 A1<br>WO 2018077474 A1 | 30-07-2019<br>04-09-2019<br>01-07-2019<br>26-04-2018<br>03-05-2018 |
| JP 2015036806 A | 23-02-2015 | NONE | |

EPO FORM P0459

For more details about this annex : see Official Journal of the European Patent Office, No. 12/82

**EP 3 989 051 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015073198 A